# EUROPEAN PATENT APPLICATION

(11) **EP 1 619 854 A1**
(43) Date of publication of application: **25.01.2006**
(21) Application number: 04425547.9
(22) Date of filing: 21.07.2004
(51) Int. Cl.: H04L 29/06, H04Q 7/22

(54) **SIP message extension for push to watch service**

(71) Applicant: Siemens Mobile Communications S.p.A., 20126 Milano (IT)
(72) Inventor: Blaiotta, Donatella, 27100 Pavia (IT); Micocci, Stefano, 4005 Castenaso (IT)
(74) Representative: Giustini, Delio

(57) **Abstract**

A PTW (Push To Watch) server inside an IMS platform implements a SIP-based protocol to deliver real time media streaming contents inside a PLMN coverage area. The PTW server adopts alternative use and definition of the SIP MESSAGE request and a new mimic for the interaction scheme. Three different labels, respectively named: *refer, ok,* and *bye* are introduced in the header field "subject" of SIP MESSAGE to notify type and destination of the body content Three corresponding SIP MESSAGE(refer), SIP MESSAGE(ok), and SIP MESSAGE(bye) are used in the involved procedures. In *"Session establishment procedure"* the PTW server receives the INVITE request message from the inviter user and sends in correspondence as many SIP INVITE request messages as the number of the invited users each containing a list including the Public user identity of each user already in the session except the inviting. Then, based on the responses from the invited users, the PTW server sends to the inviter user as many MESSAGE(refer) as the number of invited users carrying in the body content the respective responses (e.g.: invited accepted or denied), and contemporarily sends to each invited user which has accepted the invite a MESSAGE(ok) containing in the body a list including the public user identity of each invited user that has accepted, except the recipient. The *"Add user procedure"* is quite similar to the preceding one but instead of INVITE the PTW server receives a REFER from an user which intends to add new users. In *"Leaving session procedure"* the PTW server receives the BYE request message from an user that intends to leave the session and sends in correspondence as many SIP MESSAGE(bye) to all the remaining participants; each message contains in the body content a list including the public identity of each participant which has left the session (fig.11).

## Description

### FIELD OF THE INVENTION

The present invention relates to the field of the multimedia services over IMS platform (IP Multimedia Subsystem) through wireless networks, and more precisely to a SIP MESSAGE extension for Push to Watch service. Used acronyms and bibliographic references are given at the end of the description.

### BACKGROUND ART

Nowadays operators and service providers of the two widely spread communication infrastructures, respectively based on IP and wireless networks, press for a large integration of the two typologies of services. IP offers a number of attractions over traditional telecommunications protocols: in addition to representing a bridge between the telecommunications and Internet worlds, it also offers a "seamless" of communication over many different types of networks. This facilitates a wide diversity of communications scenarios, including various combinations of fixed and mobile, wired and wireless networks, the specific characteristics of which are of no interest to customers. As a result, customers will experience extremely flexible telecommunications, irrespective of the various networks over which their calls may pass. To help the understanding of the description, a list of used acronyms and bibliographic references are given in at the end of the description.

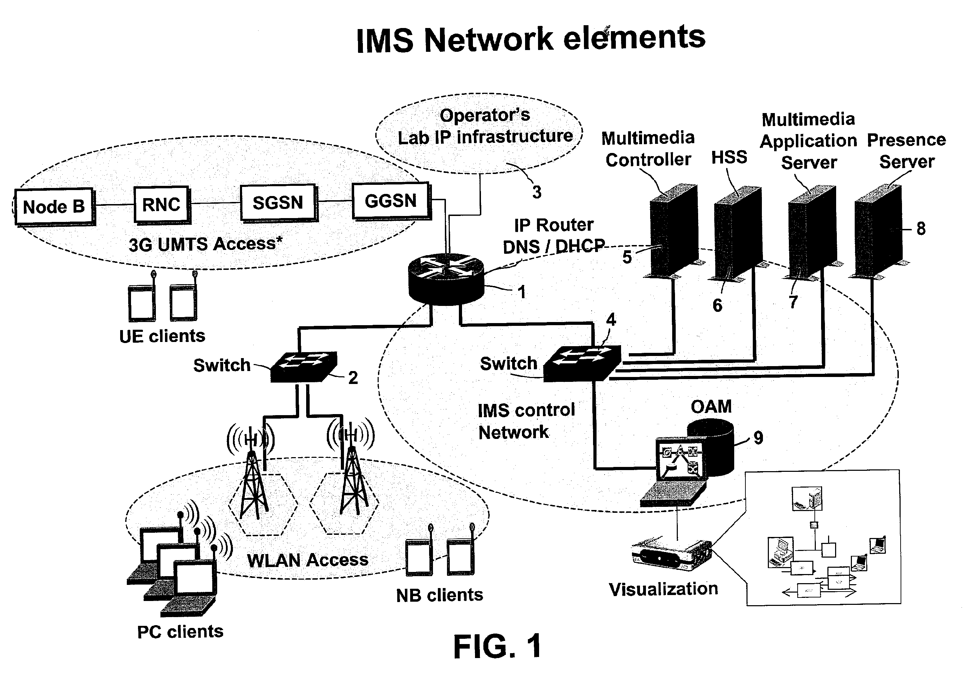

**Fig.1** shows the integration of an IMS based core network (CN) with two different Radio Access Network (RAN), namely: 3G (third generation) UMTS (UTRAN) accessed by 3G terminals, and WLAN accessed by PC or PDA clients. The system architecture depicted in **fig.1** is derivable from 3GPP TSs, also considering the consolidated IETF RFCs. With reference to **fig.1,** the UMTS access part includes the cascade of known functional blocks named: Node B, RNC, SGSN, and GGSN, as described in the relevant 3GPP Technical Specifications. An IP router 1 operating at level 3 (Network) of the OSI protocol is provided to connect the two wireless access to the IMS part. The IP router has a first connection to the GGSN block, a second connection to a first switch 2 collecting traffic of the WLAN, a third connection to the Operator's Lab IP infrastructure 3, and a fourth connection to a second switch 4 inside the IMS control network. This second switch interconnects the IP Router 1 to the following IMS apparatuses: Multimedia Controller 5, HSS (Home Subscriber Server) 6, Multimedia Application Server 7, Presence Server 8, and OAM 9; the functionality of these apparatuses will be explained later on. The IP router 1 needs of DNS / DHCP capability.

The IMS platform offers to the operators, service providers, and clients, the sort of service capabilities that IP is designed to provide. These include access to Internet and multimedia content. IMS will use the emerging IP version 6 (IPv6), considered by many to be substantially superior to the current, widely deployed version 4 (IPv4). The use of IMS in 3G systems will be optional, but is expected to be seen by operators as an attractive choice for enhancing 3G packet mode operation. The IM subsystem has as its primary focus to provide the users/clients the ability to join multimedia session in which they are allowed to send and receive voice and data communications, even when roaming. At this purpose SIP is an application-layer control (signalling) protocol for creating, modifying and terminating sessions with one or more participants. These sessions include Internet multimedia conferences, Internet telephone calls, presence service and multimedia distribution. SIP supports user mobility by proxying and redirecting requests to the user's current location. The IMS platform uses the SIP protocol **[RFC3261]** for the establishment of sessions and the service provisioning on mobile networks. According to **[RFC3261]** a SIP protocol session is considered an exchange of data between an association of participants.. For the same purpose **[3GPP_ServReq]** identifies the necessary requirements from the user point of view. According to this specification, the IM subsystem should provide the following capabilities:
- Access control: the IMS must be able to verify at any time if the user is allowed to use the resources of IMS.
- Capability negotiation: the IP multimedia applications must have the possibility to identify and select the available media components and the QoS of the sessions. The IM subsystem must allow such negotiations to be started from any party (user, operator, or the application itself on behalf of them) and at any time (at the session invocation, during the acceptance or during the session).
- Redirecting of multimedia session: the IM subsystem must allow the identification of an alternative destination for an IP multimedia session or individual media of an individual session. Similarly to the capability negotiations, the IM subsystem must allow such redirection to be started from any party (the receiving party, the sending party or the network entities on behalf of them), at any time (prior the set up of the session, during the initial request, during the establishment or during the ongoing session).
- Invoking an IP multimedia session: the user must be able to invoke one or more IP multimedia sessions and to activate concurrent applications inside each multimedia session. At this purpose the identification of the entities will be allowed through the use of both telecom and Internet numbering, depending on the ability of the originating party.
- Handling an incoming session: the terminating entity must be able to identify the session originator, to negotiate the capabilities interacting with the user profile and to decide if accept or reject the session. In particular it must be possible to accept only a subset of the offered media.
- Handling of an ongoing session: the user, as said before, must be able to decide about the addition or the deletion of media components of IP multimedia applications during a session. Moreover it must be possible for the user to suspend and resume at a later time a multimedia session.
- Ending a session: the user must be able to end an ongoing session at any time.
- Local Services: the users must be able to access, while roaming outside the home environment, services of local nature offered by the visited network.

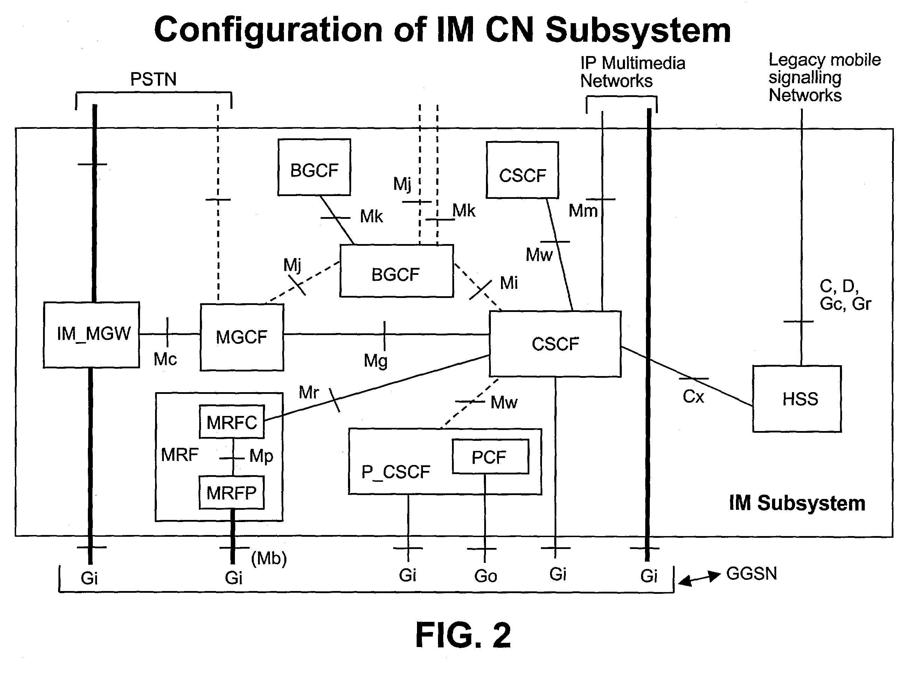

**Fig.2** shows the configuration of the IMS functional block from 3GPP vision. In the figure, thick lines indicate interfaces supporting user traffic, while dashed lines interfaces supporting only signaling. The reference architecture for IMS subsystem can be found in **[3GPP_NetArch].** A more exhaustive description of the involved entities can be found in **[3GPP_IMS].** The IM subsystem constitutes a part of the Release 5 Core Network infrastructure of PLMN, which is divided into a CS domain, a PS domain and an IM subsystem. The configuration of **fig.2** is a "Logical Model" introduced by 3GPP to define an abstract view of a network by means of information objects representing network elements, aggregations of network elements, the topological relationship between the elements, endpoints of connections (termination points), and transport entities (such as connections) that transport information between two or more termination points. The information objects defined in the Logical Model are used, among others, by connection management functions. In this way a physical implementation independent management is achieved. A Network Element is defined as a discrete telecommunications entity which can be managed over a specific interface.

With reference to **fig.2**, the IMS representation includes the following functional blocks: IM_MGW, MGCF, CSCF, P_CSCF, PCF, BGCF, MRF, HSS. The following reference points (interfaces): Mb, Mc, Mg, Mr, Mw, Mi, Mj, Mk, Mm, Cx, C, D, Gi, Go, Gc, and Gr are specified between the various blocks, as indicated in the figure. In operation, the IM subsystem refers to the set of CN entities using the service provided by the PS domain to offer multimedia services. The CSCF element can act in the following three ways: P-CSCF, I-CSCF, S-CSCF (Presence/Proxy-CSCF, Interrogating-CSCF, Serving-CSCF); the P-CSCF has been indicated separately in the figure. The P-CSCF is the first point of contact for an end-user device when the IMS is contacted from inside the same administrative domain as the IMS. The main tasks of P-CSCF are:
- forward SIP messages;
- translate IDs other than SIP URI into SIP URIs;
- maintain a security association between itself and each UE.
The I-CSCF is the first contact point, when the IMS is contacted by an IMS of another administrative domain. The main tasks of I-CSCF are:
- forward SIP messages;
- obtain from the HSS the address of the S-CSCF;
- conceal the internal network configuration, capacity, and topology. The serving S-CSCF performs session control and service triggering. The main tasks of S-CSCF are:

- act as registrar (a server that accepts register requests);
- forward SIP messages;
- interact with the application server;
- authenticate according to HSS/UMTS data;
- supports a proprietary authentication mechanism based on AKA;
- generate CDR.
The HSS is a database which contains IMS subscriber-related information. This database includes data for:
- Identification;
- authorized services;
- subscribed services.
The IM-MGW performs controls over bearers: it may terminate bearer channels from a CS network or media streams from a packet network (RTP streams in an IP network), performs media conversion (optional), process the payload (e.g. codec, echo canceller, conference bridge) and interworks with MGCF for the resource control.
The MGCF selects and communicates with appropriate CSCFs in order to control the part of the call state that belongs to connection control for media channels in an IM-MGW. It also communicates with IM-MGW (out of band signalling) and performs protocol conversion between ISUP (ISDN User Part) and the protocols of IM subsystem.
The MRF (Multimedia Resource Function) is split in two entities called MRF Controller (MRFC) and MRF Processor (MRFP) with a Mp reference point between them. The following tasks have been identified by 3GPP for these two blocks, MRFC:
- controls the media stream resources in the MRFP;
- interprets information coming from an Application Server (AS) and S-CSCF (e.g., session identifier) and controls MRFP accordingly;
- generates CDRs.
SIP is the standard protocol for the Mr interface between S-CSCF and MRFC.
The MRFP:
- controls bearers on the Mb reference point;
- provides resources to be controlled by the MRFC;
- mixes incoming media streams (e.g., for multiple parties);
- sources media streams (for multimedia announcements);
- processes media streams (e.g., audio transcoding, media analysis);
- duplicates data packets.
The BGCF block selects the network in which PSTN breakout is to occur. If it determines that the breakout is to occur in the same network in which the BGCF is located within, then the BGCF shall select a MGCF which will be responsible for the interworking with the PSTN. Otherwise the BGCF will forward this session signalling to another BGCF or an MGCF. Moreover the BGCF can generate CDRs.

The network elements identified in **fig.2** are mapped into the various servers and apparatuses of the IMS Control Network of **fig.1.** Turning the attention back to **fig.1,** the Multimedia Controller 5 is a key element of the IMS control network which is responsible for call signalling; all three functional blocks P-CSCF, I-CSCF, S-CSCF are realized in it in a modular way. The HSS apparatus 6 makes available the homonym database of **fig.2**. The Multimedia Application Server 7 is a SIP application server connected via SIP to the Multimedia Controller 5 and is able to offer three APIs:
- Java programming language (JPL) API;
- Call processing language (CPL) API;
- Hypertext transport protocol (HTTP) API.
Besides, the MRF functionalities are largely realized in the Multimedia Application Server 7.

The Presence Server 8 supports the Presence Service. The presence service provides a means to supervise the presence information of subscribers. A subscriber's presence information can be conceived as a data set containing various information elements related to his/her current communication state. Presence information can be, e.g.:
- whether a user is reachable or not at the moment,
- by which communication medium the user is reachable (e.g., voice, video, chat, instant messages),
- a short message which is to be sent when the subscriber changes his presence settings (e.g.: "Not reachable at the moment, please send instant message").
Presence data enables enhanced user services and applications, such as:
- buddy list (a display with presence information concerning a subscriber's friends", who have also subscribed to this service;
- detailed presence settings for each type of SIP session and/or media stream.

### APPROACH TO THE TECHNICAL PROBLEM

The proposed invention deals with a specific service called by the inventors Push To Watch (PTW) in analogy with known Push To Talk (PTT). According to PTW service, an user at a time gets the permission to sends a real-time source stream to a group of other selected users simultaneously by means of its handset (wireless handyphone according to 2,5G or 3G technology). The term "push" means any facility put at the disposition of the user on his handset to this aim, e.g.: a button, a selectable icon, a voice command, etc.. When the button is pushed, the multimedia stream captured by a local device installed on the terminal is delivered simultaneously to the participants to the session. PTW deals with multimedia streams of data packets representing, audio video contents. The UE clients participating to the PTW session shall comply with the same standard codes, e.g.: MPEG-4 for moving picture and AMR for the associated voice comment, JPEG for static images, MPEG-3 for high-fidelity sound, etc. Once an audio/video content is pushed by the granted client, all participants receive the streaming content simultaneously and can enjoy it on their screen/speaker by means of the player application.

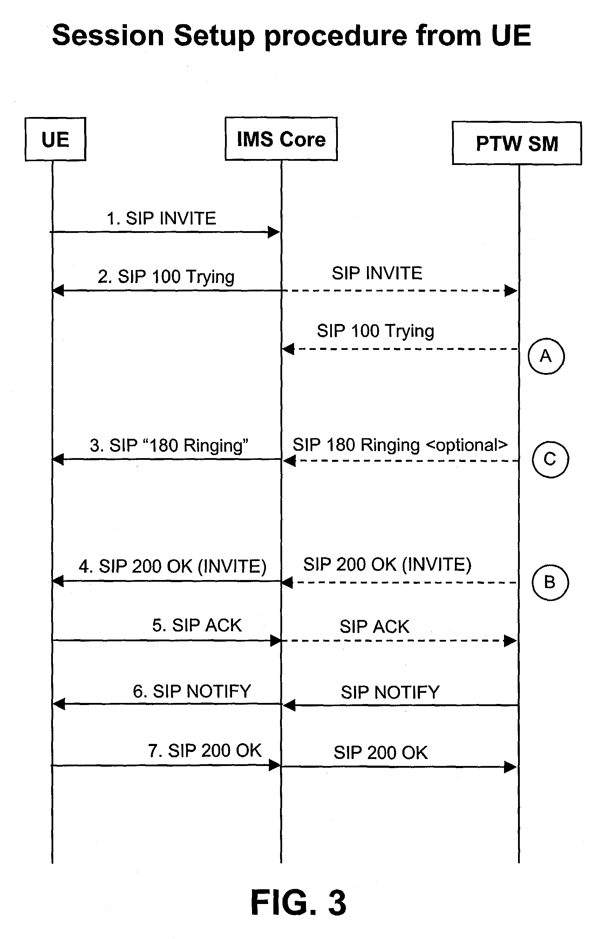

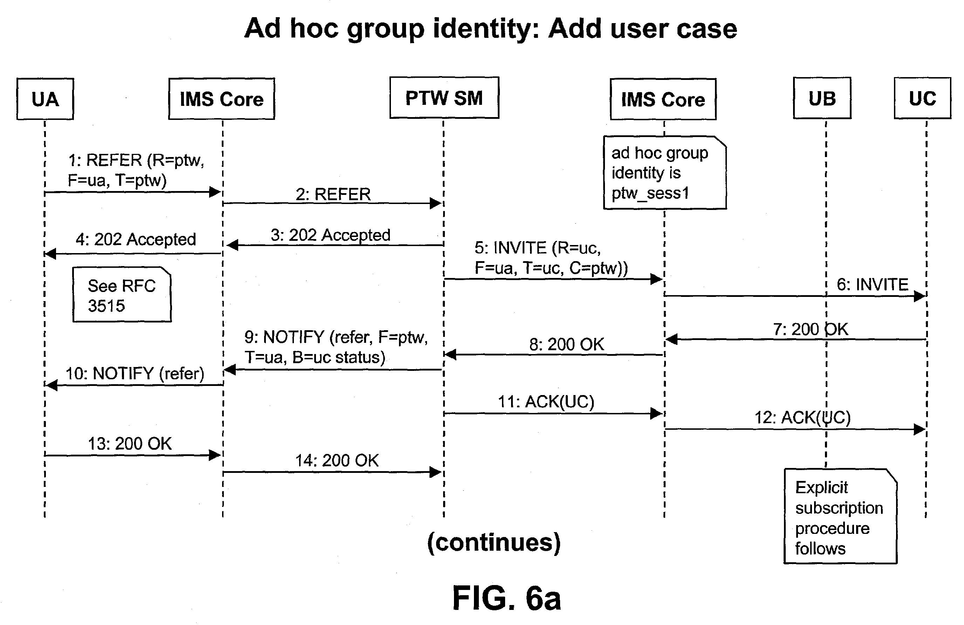

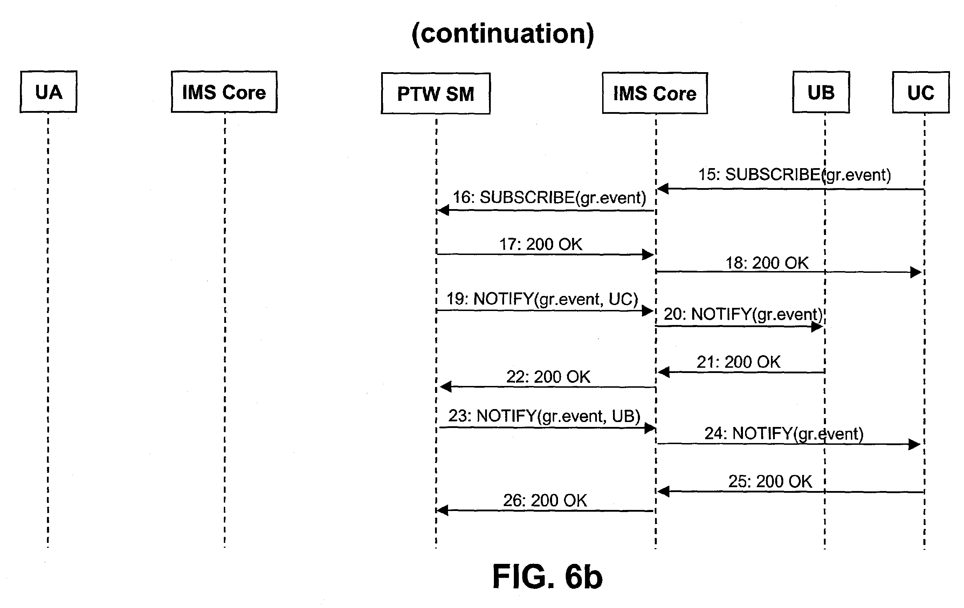

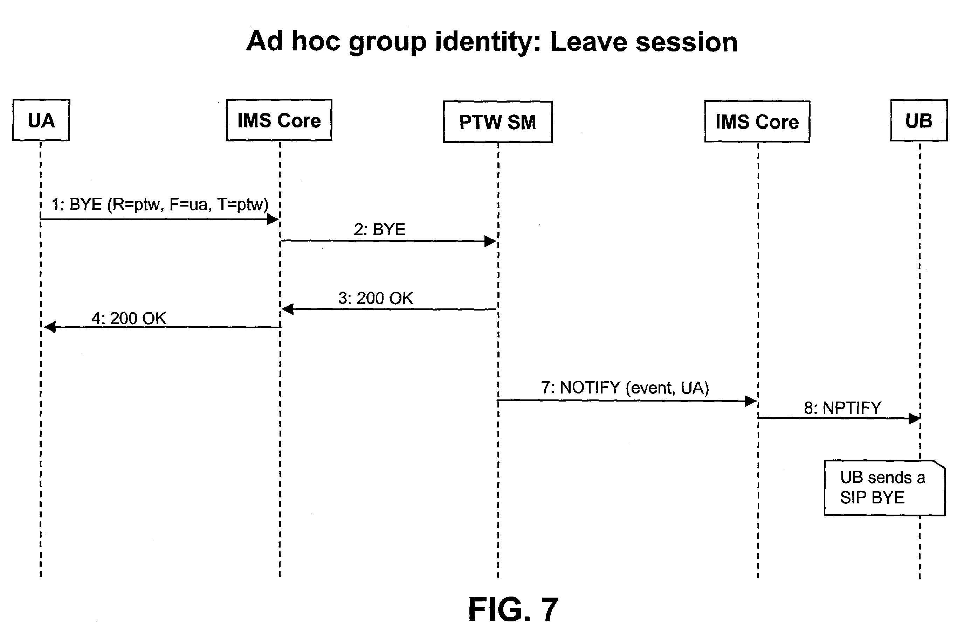

Push To Watch (PTW) is not yet a commercial service. The current specification on push services mainly concerns Push To Talk (PTT). Two working group are active at this purpose: 3GPP and OMA. 3GPP has not addressed yet how PTT-like services (e.g. PTW) can be provided by 3GPP compliant networks. At the other side, OMA identifies a family of services called Push To Talk over Cellular (PoC), that implements the capabilities for the control and duplication of the media (PoC User Plane). The OMA approach is rather different from the 3GPP approach, but it is just started and a convergence in the future is foreseen. OMA approach aims to define the PoC Server in terms of functional entities without mapping them to IMS functional entities identified by 3GPP. The PoC functional architecture is reported in **[PoC_Arch].** The definition of the interface between IMS Core and the PoC Server is out of the scope. This approach can be derived from **[PoC_User]** that specifies the User Plane functions of the PoC service. The Signaling Plane procedures (i.e., the control procedures based on SIP protocol) are defined in **[PoC_Sign].** UEs compliant with PoC operate in compliance with an extension of SIP protocol called Instant Messaging (IM), see **[RFC3428].** These documents are still in progress, so different aspects are under discussion. In conclusion, PTW service is not yet specified both by OMA and 3GPP, and the proposed approaches for the only PTT service are different between the two organizations and not easily and immediately applicable to PTW. The state of the art is described from the PoC specification [Poc_Sign] that are not already completely receipted from the standardization body (i.e. OMA). The successive **figures 3 to 9** indicate as many signalling flow charts of some important procedures of PoC [PoC_Sign] according to the current knowledge, but applied to the new PTW service.

In **fig.3,** the signalling flow charts of the procedure "Session Setup from UE" [PoC_sign] arbitrarily translated to the new service Push to Watch is represented. The PoC Server is replaced by a new PTW Server, named PTW SM (Session Manager) hereafter, more suitable for the PTW service. It is useful to point out that the PTW SM is a server designed to operate according to the invention that will be disclosed; as a consequence the use of PTW SM in the contexts of **figures** 3 to **9** relevant to the prior art is only given in a hypothetical way to the precise aim of point out the defect of the prior art. The true behaviour of PTW SM the will be disclosed in the exemplary embodiment of the invention. With reference to **fig.3,** the procedure is initiated by the UE:
1. The UE sends an SIP INVITE request to the IMS core. The session related SDP parameters includes UE's media capability.
2. The IMS core:
   a. Sends a SIP "100 Trying" response to the UE and,
   b. Authenticates the end user as described in and if authentication is successful continue processing
   c. Authorizes the end user (check to see if the end-user is provisioned to use the service) to establish a PTS-MIM session and if authorization is successful continue processing
   d. Sends the SIP INVITE request to the address of the PTW SM obtained as a part of the trigger information in the CSCF
3. The PTW SM:
   a. Sends the SIP "100 Trying" response to the IMS core;
   b. Checks if the UE supports the session timer and if that is the case continue processing
   c. Interprets the SIP INVITE as an implicit floor request; and,
   d. Interprets the SIP INVITE as an implicit subscription to the user status
   e. The PTW SM waits until at least one of the invited users answer before continuing
4. Optionally if the PTW SM receives the first ringing indication from one of the invited users, the PTW SM sends the SIP "180 Ringing" response to the IMS core. The IMS core shall send the SIP "180 Ringing" to the UE.
5. At correlation point B, when the PTW SM has information that at least one of the invited user has accepted the invitation the PTW SM sends the SIP "200 OK (INVITE)" response with the media answer in SDP to the IMS core. The IMS core shall send the SIP "200 OK (INVITE)" response to the UE.
6. The UE shall:
   a. provide the end user with a b-connected (meaning that at least on of the invited user has accepted the invitation) indication.
   b. send the SIP ACK request to the IMS core. The IMS core sends the SIP ACK request to the PTW SM.
7. The PTW SM sends the SIP NOTIFY request for each final response received from invited users to the IMS core. The IMS core sends the SIP NOTIFY request to the UE.
8. The UE sends the SIP "200 OK" (NOTIFY) response to the IMS core. The IMS Core sends the SIP "200 OK" (NOTIFY) response to the PTW SM.

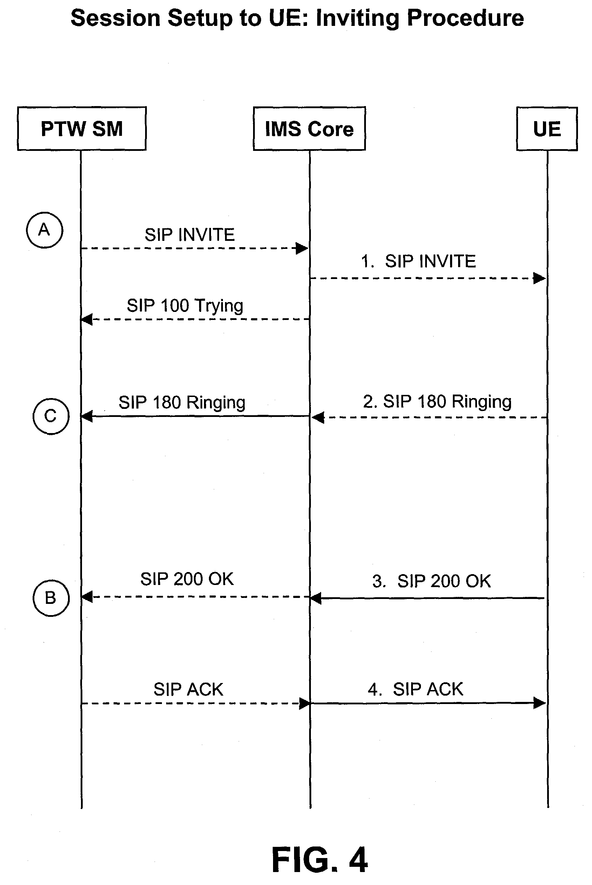

With reference to **fig.4,** the Inviting Procedure of "Session Setup to UE" for the successful invitation of an end user to a PTW session, is performed as in the following:
1. The PTW SM shall:
   a. Triggered by the Accept-Contact, check the status of the Don-not-Disturb (DnD) feature. If the DnD feature is not activated for the invited user continue processing as per b).
   b. Authorize the inviting user to establish a media session to the invited user using the invited user's access lists. If the invited user is authorized continue processing
   c. Send an SIP INVITE request to the IMS core. The IMS core shall send the SIP INVITE request to the address of the UE obtained during registration. The session related SDP parameters shall include an offer of the UE media capability.
2. The UE shall:
   a. Check that the SIP INVITE includes the Accept-Contact header and if the header is included continue processing
   b. Provide the user with a PTW session-request indication. The indication shall include the identity of the inviting user;
   c. Send the SIP "180 Ringing" indication to the IMS core. The IMS Core sends the SIP "180 Ringing" response to the PTW SM.
3. When the user accept the session, the UE shall:
   a. Send a SIP "200 OK" response with the media answer in the SDP;
   b. Provide the user with a start-watching notification meaning that the other user will be sending media content (audio/video).;
   c. Start receiving media bursts.
4. The PTW SM:
   a. Sends a SIP ACK request to the IMS core. The IMS core shall send a SIP ACK to the UE.

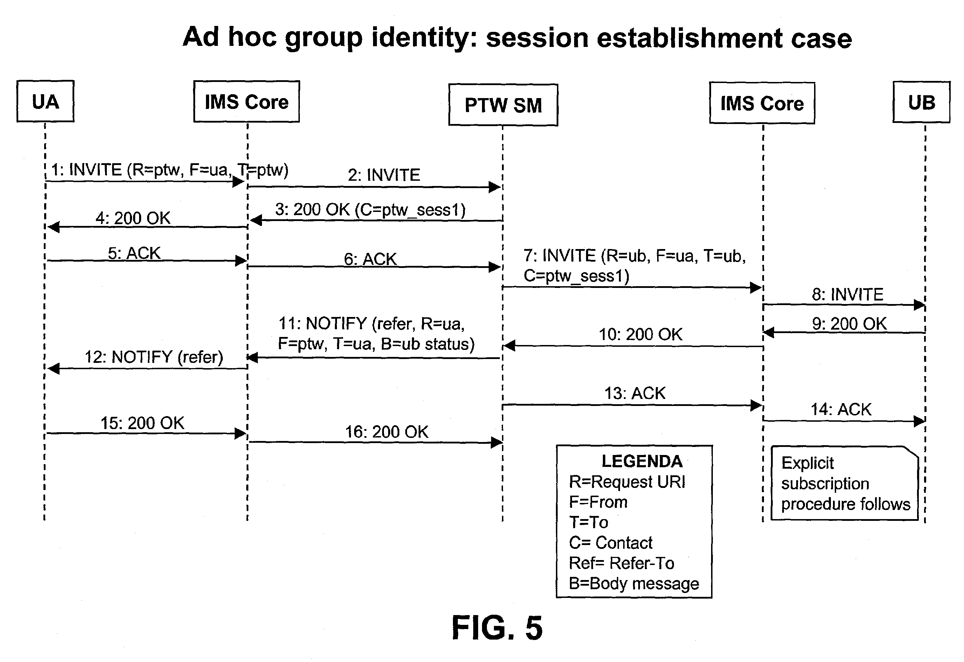

Concerning the "Session Management identity", PTW service can be considered a service belonging to the *"Ad-instant-group talk"* class as defined in **[PoC_Req]** and hereafter reported:
*"In ad-hoc instant group talk,* a *user invites selected users to establish an ad-hoc instant group talk session. An inviting user selects invited users from a contact list or by typing the addresses of the invited users and initiates an ad-hoc instant group talk. Only transient ad-hoc group identity is created in the network for this feature. Each invited user can either accept or reject the invitation, depending on the user's preference.* "
It means that only a transient ad-hoc-group identity is created in the network during the PTW session establishment and the inviting user does not have to create previously a group but he selects the invited users from a contact list or typing directly their address. Hereafter is described how and when the ad hoc group identity is generated and exchanged as specified in **[PoC_Sign].** The following **Figures 5, 6a, 6b,** and 7 show how the ad hoc group identity is exchanged between server and users, as specified in **[Poc_Req]** and **[Poc_Sign]** but referred by hypothesis to PTW. When the user wants to start a push session, he sends a SIP INVITE message to the PTW SM requiring the "ad hoc group identity". The server understands this request from the Request-URI and To header parameter (e.g. poc@domain). The ad hoc group identity is generated by the server and passed to the IMS client with the SIP 200 OK Contact header. Then the server sends the SIP INVITE messages to the invited users (one for each invited user), with the ad hoc group identity stored in the contact header of the SIP INVITE message. When the user adds a new participant to the session, the PTW SM sends the SIP INVITE to the potential new participants sending the ad hoc group identity in the contact header related to the session in progress. SIP BYE, NOTIFY, MESSAGE, 1XX, 2XX and 4XX messages doesn't bear the "ad hoc group identity". The server, as specified in **[Poc_Sign]** will generate the ad hoc group identity that will be the ConferencelD parameter in a contact header. The ConferencelD parameter in a contact header is not admitted by several IMS platforms available now.

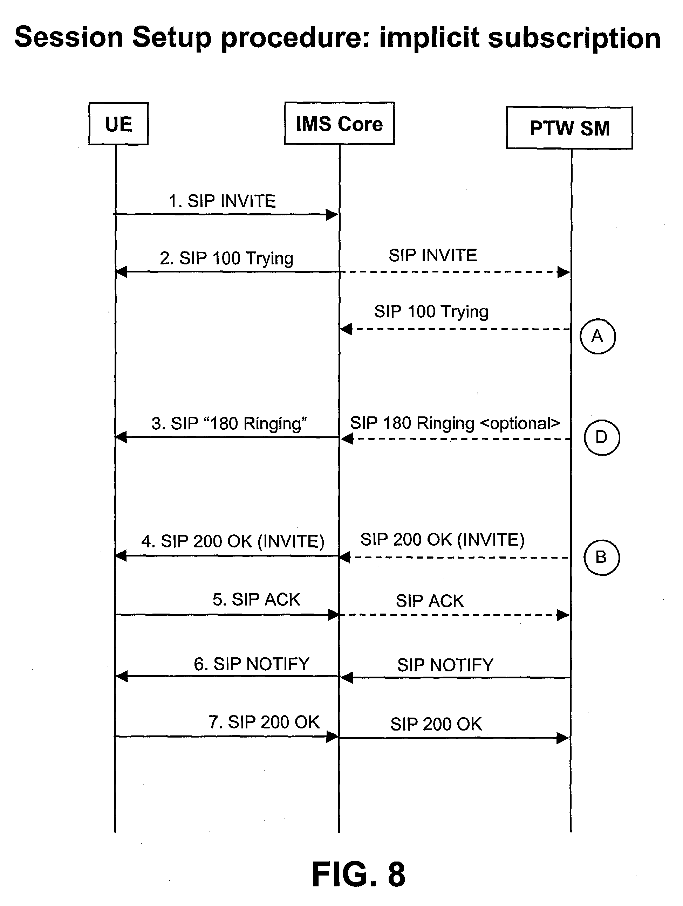

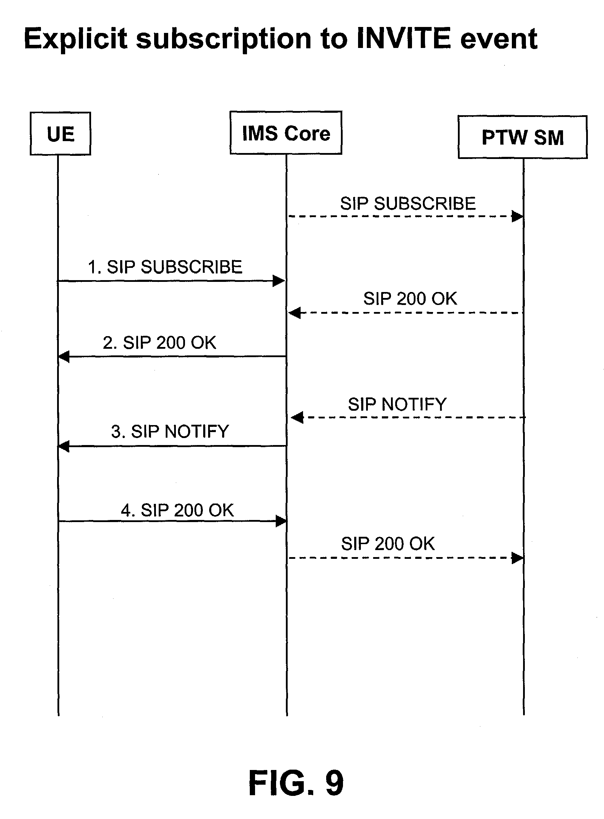

The "implicit subscription" is a mechanism reported in [PoC_sign] and it is applied during the Setup Procedure. As indicated in **fig.8,** the User Equipment (UE) sends a SIP INVITE message to the PTW SM that interprets the SIP INVITE message as an implicit subscription to the user status. As consequence of this, the PTW SM will send a SIP NOTIFY message to the UE. The SIP NOTIFY message provides the answer from the user invited (SIP 200 OK, or 'reject code", for example 486 Busy). The PTW SM sends one SIP NOTIFY message for each invited user. The implicit subscription procedure is not supported by several IMS platforms available now. The *"explicit session event subscription"* is a mechanism reported in **[PoC_Sign]** but not completely specified in OMA. It is applied during the Setup Procedure and ADD User procedure. As indicated in **fig.9,** once the inviting procedure is successfully completed, the "invited user" shall explicitly subscribe itself to session events. Subscription for this information shall be rejected by the PTW SM if the session is a one-to-one. As consequence of this, the PTW SM will send a SIP NOTIFY message. If UE sets the SIP SUBSCRIBE message with zero as subscription expiration, the PTW SM shall send one only SIP NOTIFY request indicating the current situation. The implementation of the *"explicit session events subscription procedure"* is not defined clearly in [PoC_Sign]. OMA is working on this aspect but an operative proposal has not been released by now (see **[PoC_Arch]).**

As just said, the standardization bodies (i.e.OMA) are working on aspects like the exchanges of notification and information during setup and progress of short streaming sessions in accordance with pushing paradigm, but by now a consolidated specification is not available. Moreover, the intermediate results don't take in consideration the constraints introduced by the IMS platforms available now and during the next future. Due the early stage of the specification process, some features, that should be appreciated in the present Push To Watch procedure are not still defined. The main shortcomings of the prior art concerns both the information conveyed with standard SIP messages and the adequacy of interaction schemes of these messages. For example, the possibility for an invited user to know who is already in session and who is coming in the session, is not still defined in standard ADD USER procedure. Furthermore, known message sequence diagrams are not oriented to support "floor control" and "streaming duplication" adequately, which are two functionalities inside Push To Watch out of the scope of the present invention.

### OBJECTS OF THE INVENTION

As a consequence, the main object of the present invention is that to overcome the underlined drawbacks of the instant messaging (pushing services) according to the current standardization represented by the IMS or other SIP-based commercial platforms inside a PLMN coverage area, and offer more profitable signalling interactions and new features oriented to improve the fruition of the new Push to Watch service by the wireless subscribers without leaving the SIP protocol framework.

### SUMMARY AND ADVANTAGES OF THE INVENTION

The invention achieves said object by providing a multimedia and real time communication protocol, as disclosed in the protocol claims.

Other object of the invention is a multimedia application server, named PTW server, for delivering real time multimedia streams inside general network infrastructure, as disclosed in the server claims. The PTW server is added to an IP platform/infrastructure based on SIP protocol; the infrastructure is integrated in the PLMN's core network to provide IP services, method, and application inside the coverage area. The PTW server is charged to act as go-between the invited/participants of an instant ad hoc group **([PoC_Req])** which set up transactions concerning the session related messaging **([RFC3428], [RFC3261]).**

In SIP environment a Push to Watch session would be intended as a media session initiated with an INVITE transaction and terminated with a BYE transaction. A SIP request message named "MESSAGE" is introduced by the specification **[RFC3428])** to carry in the request body the information needed to set up a PTW session. MESSAGE is a very flexible SIP request message supported by every SIP platforms and SIP Application environments. In fact, it is a generic asynchronous SIP message that can be used inside or outside to the session. It is also possible to specialize its structure according with the service requirements. A header field "Subject" of the SIP MESSAGE Request [RFC3261, RFC3428] provides a summary or indicates the nature of the SIP MESSAGE message, allowing call filtering without having to parse the session description.

With the extension of the present invention three specialized SIP message MESSAGE and identified with the following labels included into the header field named Subject;
- "refer"
- "ok" and
- "bye" ,
to indicate SIP MESSAGE Request with subject = refer, or subject = ok, or subject = bye. These notations are specialized as in the following: "SIP MESSAGE(refer, UC)" to indicate that the SIP MESSAGE either used with an *"establishment session procedure"* or an *"add user procedure"* carries the response of the generic user C directed to the inviter. The notation MESSAGE(ok, UC) is adopted to indicate that the message either used with an *"establishment session procedure"* or *"add user procedure"* carries the response of the user C directed to the other invited users. Finally the notation MESSAGE(bye, UC) is adopted to indicate that message used with a *"Leaving session procedure"* carries the BYE indication of the generic user C. The standard mimic giving support to: *"Session establishment procedure"* or a *"Add user procedure* and *"Leaving session procedure" are* modified by the introduction of these extended messages. Furthermore, also the message body content of the SIP INVITE request message is partially extended. More particularly:
In correspondence of the *"Session establishment procedure"* the PTW server receives the INVITE request message from the inviter user and sends in correspondence as many SIP INVITE request messages as the number of the invited users. According to **[3GPP_NetArch]** each new INVITE message contains a list including the Public user identity of each invited user except the inviting and the recipient ones. According to the invention, each new INVITE message contains a second list including the Public user identity of each user already in the session except the inviting. Then, basing on the responses from the invited users, the PTW server sends to the inviter user as many MESSAGE(refer, UC) as the number of invited users carrying the respective responses (e.g.: invited accepted or denied), and contemporarily sends to each invited user which has accepted the invite a MESSAGE(ok, UC) containing in the body a list including the public user identity of each invited user that has accepted, except the recipient.
In correspondence of the *"Add user procedure"* the PTW server receives the REFER request message from the inviter and sends in correspondence as many SIP INVITE request messages as the number of the new invited users. According to **[3GPP_NetArch]** each INVITE message contains a list including the public user identity of each new invited user except the recipient. According to the invention, each new INVITE message contains a second list including the Public user identity of each user already in the session except the inviting one. Then, basing on the responses from the new invited users, the PTW server sends to the inviter user as many MESSAGE(refer, UC) as the number of new invited users to carry in the body content the respective responses (e.g.: invited accepted or denied), and contemporarily sends to each added user and to each users already in the session, a MESSAGE(ok, UC) containing a list including the public user identity of each new invited user that has accepted the invite, except the recipient.
In correspondence of the *"Leaving session procedure"* the PTW server receives the BYE request message from an user that intends to leave the session and sends in correspondence as many SIP MESSAGE(bye, UC) to all the remaining participants; each message contains in the body a list including the public identity of each participant which has left the session in the message content.

From the three different contents of the header field "Subject" belonging to the SIP MESSAGE Request entering as said the following interaction schemes:
originating USER → IMS platform → PTW server → IMS platform → destination USERs;
and in the other direction:
destination USERS → IMS platform → PTW server → IMS platform → originating USER,
it can be appreciated the advantages with respect of the old signaling schemes and protocol largely based on the two SIP Request messages SUBSCRIBE and NOTIFY used at the end of the *"Session establishment procedure"* to perform an explicit session subscription. In fact, thanks to the synergism deriving from the extended content of the SIP MESSAGE(refer) Request in combination with he new mimic of its use, a noticeable throughput is saved during the session setup procedure, because the SIP SUBSCRIBE and NOTIFY Request messages traditionally used for this aim are made obsolete.

It also can be appreciated the completeness of the information conveyed in the various lists compiled by the PTW server to inform both the originating and destination users. With that the drawbacks of the known *"session setup"* and *"add user"* procedures, due to the impossibility for an invited user to know in advance who is already in session and who is coming in the session is overcome. This is a very interesting features for the user, in fact, let us suppose the list include the identity of unpleasant people, the invitation might be rejected before the session is established. **N.B.:** the list including the public identity of each users invited to the session except for the recipient is already considered in current standards.

In the end, the present invention proposes a solution to the highlighted problem that several SIP compliant platforms do not admit the presence of the conference identifier parameter (ad hoc group identity) inside the SIP header field "contact", as instead indicated in the current standardization to store the ad hoc group identity generated by the application server. The solution proposed by the invention consists of the fact that:
- the ConferencelD parameter is the Session Identifier (SessID) generated by the same user which also generates the session, instead of being generated by the server as the standard proposal;
- the ConferencelD parameter indicating the session is included in the header field "Conference-ID", instead of the header field "contact" of the standard proposal;
- the header field "Conference-ID is included in all the SIP messages of the session and has the same value.

According to the many improvements mainly introduced in the SIP MESSAGE request, another object of the present invention is an extended SIP MESSAGE request designed according to the aforementioned features to be used by the PTW server.

Still another object of the present invention is an extended SIP INVITE request message designed to be used by the PTW server.

Thanks to the proposed solutions based on:
- the extended content of the SIP message request "MESSAGE" (both the content of the header field "subject" and the information lists),
- the alternative mimic of said SIP MESSAGE request instead of SUBSCRIBE and NOTIFY,
- the extended content of SIP INVITE request generated by the PTW server (the information lists),
- the new sourcing and location and of the ConferencelD parameter,
the resulting implementation of the real time multimedia service called PTW service for delivering audio video streaming instead of simple voice over IP, is really in line with the standardization process but more flexible. The main advantages deriving from the present PTW invention are listed below:
- PTW service is easy to be implemented on the main platforms available now.
- It guarantees a service implementation also on the future IMS platforms because the specified procedure and the messages are in line with the standardization process.
- The additional features with respect to the specification might favorable address the standardization body to adopt the proposed solutions.

### BRIEF DESCRIPTION OF THE DRAWINGS

The features of the present invention which are considered to be novel are set forth with particularity in the appended claims. The invention and its advantages may be understood with reference to the following detailed description of an embodiment thereof taken in conjunction with the accompanying drawings given for purely non-limiting explanatory purposes and wherein:
- **fig.1,** already described, depicts the main network elements of a complex scenario comprising an UMTS and a WLAN access to an IP Multimedia Subsystem (IMS) control network;
- **fig.2,** already described, shows the functional configuration of the IMS according to **[3GPP_NetArch],** (see the References at the end of the description), which the control network of the preceding figure is derived from;
- **fig.3,** already described, shows the message sequence chart of a Session Setup procedure from UE according to the known art thought for PTW service.;
- **fig.4,** already introduced, shows the message sequence chart of a Session Setup procedure to UE or "Inviting procedure" according to the known art thought for PTW service;
- **fig.5,** already introduced, shows the message sequence chart of ad hoc group identity: Session establishment case according to the known art thought for PTW service;
- **figures 6a, 6b**, already introduced, shows the message sequence chart of ad hoc group identity: Add user case according to the known art thought for PTW service;
- **fig.7,** already introduced, shows the message sequence chart of ad hoc group identity: Leave session case according to the known art thought for PTW service;
- **fig.8,** already introduced, shows the message sequence chart of a Session Setup procedure: implicit subscription according to the known art thought for PTW service;
- **fig.9,** already introduced, shows the message sequence chart of an Explicit subscription to INVITE event according to the known art thought for PTW service;
- **fig.10** shows a high level functional UMTS&IMS architecture suitable for push-type services, hence Push to Watch;
- **fig.11** shows a diagrammatical representation of the Push to Watch scenario - messages and interactions - in case of Session Establishment procedure, according to the present invention;
- **fig.12** shows the message sequence chart of One to One session establishment procedure according to the representation of fig.11;
- **figures 13a, 13b,** show the message sequence chart of Many to Many session establishment procedure according to the representation of fig.11;
- **fig.14** shows the message sequence chart of One to One session establishment rejected procedure according to the representation of fig.11;
- **figures 15a, 15b,** show the message sequence chart of Many to Many session establishment rejected procedure according to the representation of fig.11;
- **fig.16** shows a diagrammatical representation similar to the one of fig.11 but for Add new user procedure;
- **fig.17** shows the message sequence chart of Add user procedure (one user) according to the representation of fig.16;
- **figures 18a, 18b,** show the message sequence chart of Add one user procedure (more than one) according to the representation of fig.16;
- **fig.19** shows the message sequence chart of Add user rejected procedure according to the representation of fig.16;
- **fig.20** shows a diagrammatical representation similar to the one of fig.11/16 but for Leaving Session procedure;
- **fig.21** shows the message sequence chart of One to One release session procedure according to the representation of fig.20;
- **fig.22** shows the message sequence chart of Many to many release session procedure according to the representation of fig.20;

### DETAILED DESCRIPTION OF SOME PREFERRED EMBODIMENTS OF THE INVENTION

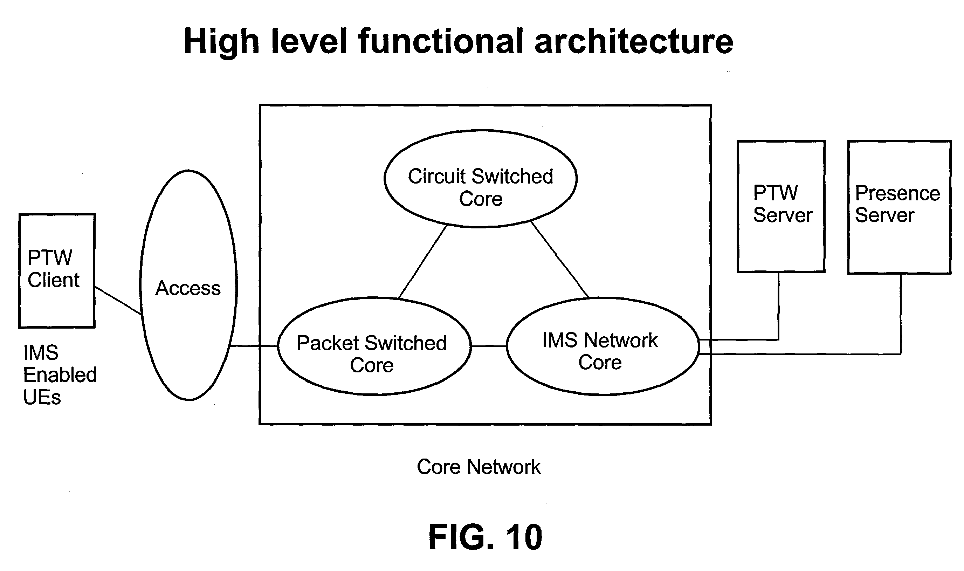

**Fig.10** outlines a reference high level functional architecture for implementing the PTW service. With reference to **fig.10,** the architecture includes the following functional blocks: PTW Client, Access (network), Core Network, PTW SM, and Presence Server. The Core Network includes in its turn three interconnected functional blocks: Circuit Switched Core, Packet Switched Core, and IMS Network Core. The PTW Client block is functionally connected to the Packet Switched Core trough the Access block. The IMS Network Core is connected to the Packet Switched Core, at one side, and to the PTW SM and Presence Server at the other side. In this way the IMS Network Core has the full control and visibility of the information relevant to the PTW Client which is an IMS Enabled Terminal. With the exception of Circuit Switched Core, the other blocks of **fig.10** are easily mapped into the elements of **fig.1,** in particular the PTW SM could be considered a functional block running in the Multimedia Application Server 7. In operation, the main feature, which characterizes the Push To Watch service, consists on transmitting a data stream, via IP, from a multimedia (video and audio) mobile terminal to another mobile terminal. In this way, an user accessing the service could ask to receive the audio-video content or decide to send the data stream to another mobile terminal, acting as a multimedia source. Audio/video contents are directly streamed from the source to the user(s) without any kind of store and forward mechanism. The sender selects one or more users to contact, then, starts streaming the video content by pushing a button on his terminal. More than two partners can be involved in the same session (many-to-many). During the Push To Watch session, every participants can take the permission to transmit and he can add a new user to the session. In a certain moment one of them will have the permission (GRANT) to transmit, the others will be receive the same data stream transmitted.

The Use Case description will be inspired to the following schema. The *Actors* that work in a particular context *(Precondition)* act to obtain the *Goal* by means of all the described steps *(Actions).* At the end of the action the system will be in a new state *(Postcondition).* Any kind of errors or abnormal situation will be described in the *Exception.*
*ACTOR:* An actor is a role that a user plays in the system.
*GOAL:* What is the purpose for this Use Case.
*PRECONDITION:* The condition that will be verified for the Use Case described.
*ACTION:* It is a textual description of the steps required and any alternative actions at each step.
*POSTCONDITION:* The effect of the Use Case on the other elements of the service.
*EXCEPTION:* All the cases that don't permit to complete the Use Cases steps.
The main PTW service use cases are:
- Session establishment (one to one, many to many);
- Add a new user;
- Leaving session

### PTW SESSION ESTABLISHMENT (one-to-one)

*ACTORS:* User A, User B
*GOAL:* Open a PTW session with a user present in the buddy list.
*PRECONDITIONS:* User A and User B are provisioned and registered to the IMS. The buddy list client of User A is running. The UMTS connection is available.
*ACTIONS:*
1. User A selects User B from the buddy list;
2. User A pushes the PTW Button the PTW screen pops up;
3. A courtesy message (or a graphical method) indicates to User A that User B is being contacted;
4. User B is asked to accept or reject the session;
5. User B accepts the session;
6. User B PTW client is started.
*POSTCONDITIONS:* The session is established. The images being captured by the camera are shown in the *preview*/*show* part of both clients on the respective phones.
*EXCEPTIONS:* The system is down: the user will be automatically logoff by the system. User B(A) is no longer available: a failure reason message informs User A(B). User B rejects the incoming PTW session: the MIM session will not start and a failure reason message informs User A.

### PTW SESSION ESTABLISHMENT (many-to-many)

*ACTORS:* User A, User B, User C.
*GOAL:* Open a MIM session with two users present in the buddy list.
*PRECONDITIONS:* User A, User B and User C are provisioned and registered. The buddy list client of User A is running. The UMTS connection is available.
*ACTIONS:*
1. User A selects User B and User C from the buddy list;
2. User A pushes the PTW Button the PTW screen pops up;
3. A courtesy message (or a graphical method) indicates to User A that User B and User C are being contacted;
4. User B is asked to accept or reject the session;
5. User C is asked to accept or reject the session;
6. User B accepts the session;
7. User C accepts the session;
8. User B and User C PTW clients are started.
*POSTCONDITIONS:* The session is established. The images being captured by the camera are shown in the *preview*/*show* part of clients on the respective phones.
*EXCEPTIONS:* The system is down: the user will be automatically logoff by the system. A User is no longer available: a failure reason message informs the remaining Users. User B(C) rejects the incoming PTW session: the PTE session will start with the remaining User and a failure reason message informs User A.

### ADD A USER TO A PTW SESSION

*ACTORS:* User A, User B, User C.
*GOAL:* Add a user to a session. A session is established between User A and User B. User C is provisioned and registered
*ACTIONS:*
1. User A selects the Add soft button in the *status*/*command* part of the PTW client;
2. User A selects User C from the buddy list;
3. A courtesy message (or a graphical method) indicates to User A that User C is being contacted;
4. User C is asked to accept or reject the session;
5. User C accepts the session;
6. User C client starts.
*POSTCONDITIONS:* A three party session is established. The images being captured by the camera are shown in the *preview*/*show* part of all clients on the respective phones.
*EXCEPTIONS:* The system is down: the user will be automatically logoff by the system. User A, B or C is no longer available: a failure reason message informs the other users. User C rejects the incoming PTW session: User C will not be added to the MIM session and a failure reason message informs User A and User B.

### PTW SESSION LEAVING

*ACTORS:* User A.
*GOAL:* User A leaves a PTW session.
*PRECONDITIONS:* User A established a MIM session with one or more users.
*ACTIONS:*
1. User A presses the "End Session" button on the status/command part of the client.
2. The other users belonging to the session will be notified that User A left the session.
3. If there was only one users (other than User A) in the session, the session is torn down.

*POSTCONDITIONS:* User A PTW client is shut down.
*EXCEPTIONS:* The system is down: the user will be automatically logoff by the system. User A UMTS connectivity is lost: other users will be notified after a time-out.

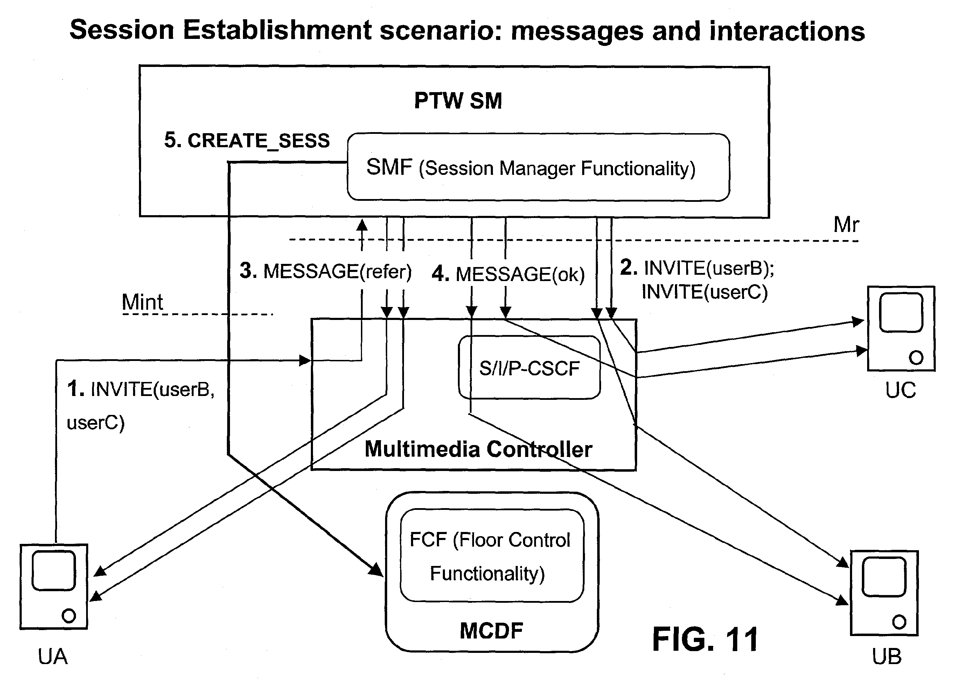

The scenario (elements, messages, interactions) valid for PTW SESSION ESTABLISHMENT (many-to-many) is represented in fig.11. The following entities are represented: PTW SM (PTW Session Manager), Multimedia Controller (label 5 in fig.1), MCDF, and UA, UB, UC. The latter correspond to the handset of user A, B, and C subscribers of the PTW service. Hereinafter in the description the labels UA, UB, UC indicates: the users/subscribers A, B, and C, their handset, their players, the wireless clients, indifferently. PTW SM includes a SMF block (Session Management Functionality), Multimedia Controller includes a S/I/P-CSCF, and MCDF includes a functional block FCF (Floor Control Functionality). Standard Mr interface (fig.2) is indicated between the Multimedia Controller and PTW SM in the figure, standard Gi interface (fig.2), although not indicated, is anyway present between MCDF and GGSN (fig.1). One not standard Mint internal interface is indicated between PTW SM and MCDF. A first signal INVITE(userB,userC) issued from UA is directed to PTW SM crossing the Multimedia Controller. Second signals INVITE(userB) and INVITE(userC) outputted from PTW SM are respectively directed to UB and UC, crossing the Multimedia Controller. Two third type of signals MESSAGE(refer) outputted from PTW SM are directed to UA crossing the Multimedia Controller. Two fourth type of signals MESSAGE(ok) outputted from PTW SM are directed to UB and UC, respectively, crossing the Multimedia Controller. And finally a fifth signal CREATE_SESS goes from PTW SM to the MCDF block directly. For the sake of simplicity, the response signals (e.g. 200 OK) from UA, UB, and UC to the PTW SM are not represented. All signals indicated are in reality packet data SIP signalling messages (packets) using TCP/IP as transport protocol.

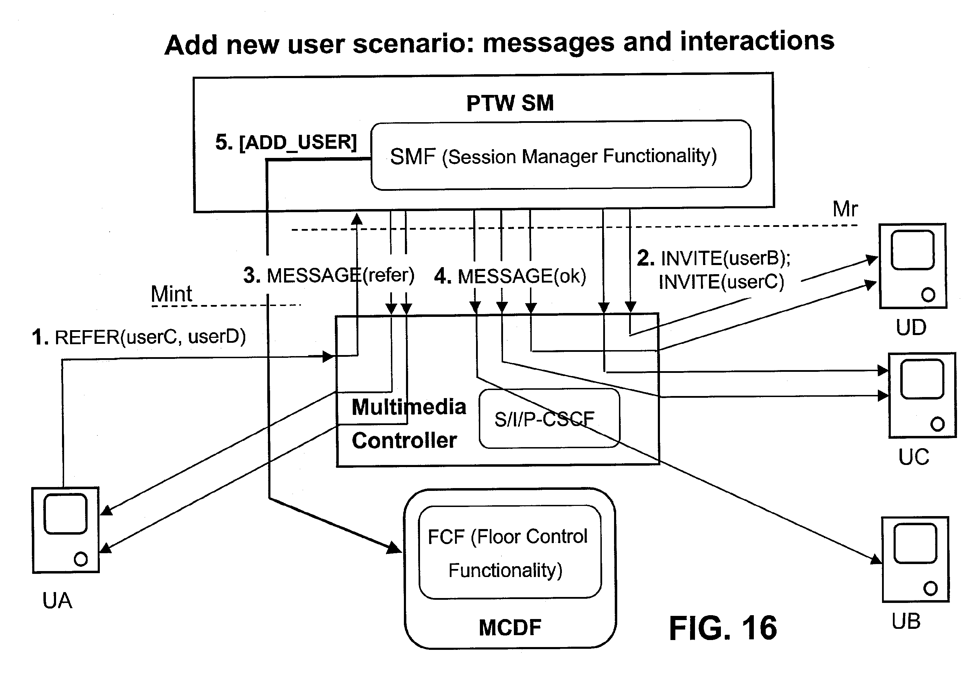

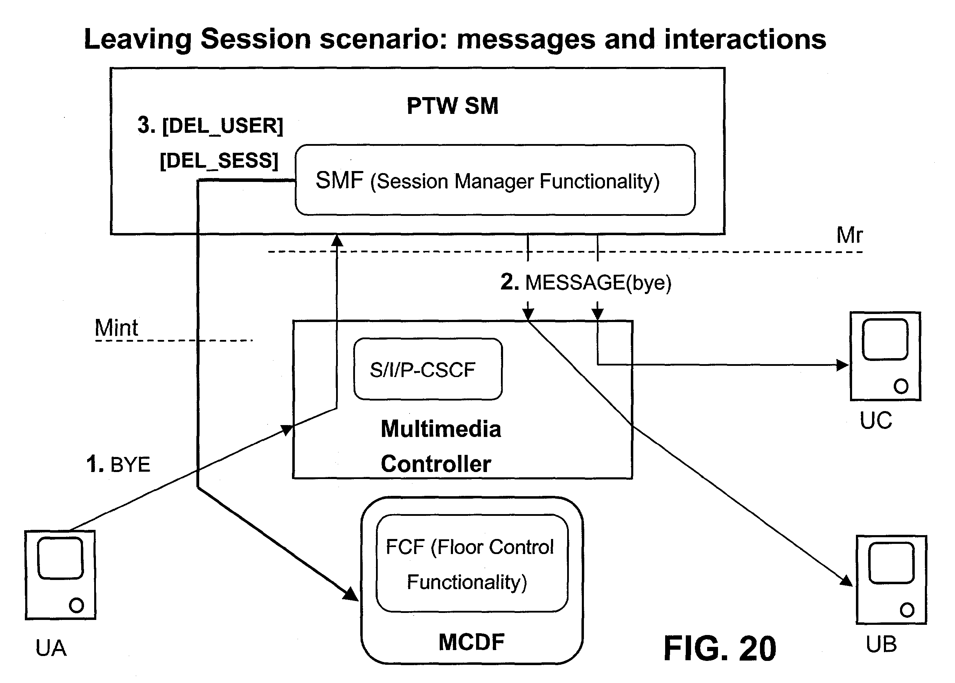

The successive considerations about the various entities depicted in **fig.11** will be generally valid for all the following scenarios: Session Establishment/Rejected cases presented in **fig.11** to **15b,** Add/Rejected User cases presented in **fig.16** to **19,** and the Leaving Session cases presented in **fig.20** to **22.** The Multimedia Controller supplies the PTW SM block with S/I/P-CSCF functionalities for correctly routing the user signalling/data through the IP network. From the implementation point of view of the PTW SM and the MCDF blocks can be included in the Multimedia Application Server (label 7 in fig.1), while the MCDF can be considered as an independent application element or as an upgrade of the MRFC and MFRP sub-elements belonging to the MRF network element (fig.2). In operation, the Multimedia Controller supplies the UA, UB, and UC client, so as the PTW SM block with S/I/P-CSCF functionalities for correctly routing user signalling/data through the IP network. The PTW SM block:
- includes the PTW Server and the relevant: processing means, memory means, timing means, input-output and peripheral means, etc. Besides, the boot process of the PTW Server initializes all the resources which are needed to run the PTW service of the present invention;
- acts as SIP signalling intermediary between originating and terminating users of the PTW service;
- generates some proprietary signalling messages for the MCDF block useful to the floor control and flux duplication. In the Session Establishment case of **fig.11** this message is CREATE_SESS but other proprietary signals are foreseen for both the "ADD User" and "Leaving Session" procedures.

The MCDF block, after having received the needed parameters from CREATE_SESS, autonomously interacts with the PTW participants at User Plane through a floor control procedure embedded into the FCF functionality. The main task of FCF block is to manage the direction of the data flow. The owner of the floor can send video plus audio to the other participants of the session. If the owner of the floor releases the control of the data flow, one of the other participants can require the control of the floor and, if granted, transmit audio/video to the other participants. This means that the floor control mechanism allows only one user to send a media stream at any given time. RTCP packets are used for floor control. Floor control and stream duplication procedures are out of the scope of the present invention, so their details are deliberately ignored except for a glimpse given hereafter. The following floor control procedures are implemented:
- Floor Request - This provides the terminal with a procedure for requesting the permission to transmit media to other participants in the session.
- Floor Grant - This procedure is used by the network to inform the terminal that has obtained the floor requested.
- Floor Release - This provides the terminal with a procedure for releasing the granted floor to other users in the session.
- Floor Idle Indication - This procedure is used by the network to inform participants that the floor is idle.
- Floor Deny - This procedure is used by the network to reject a Floor Request from a participant.
- Floor Taken - This procedure is used by the network to inform the requesting participant that a Floor Request from another participant has succeeded and the floor is not available any more.

In the following
Without limitation:
- TCP protocol **[RFC0793]** is transport protocol used at the two ends of the Mr and Mint interfaces.
- RTP/RTCP protocol **[RFC3550]** is used to convey the pushed PTW contents and the floor related signalling.
- UDP protocol **[RFC0768]** is used to convey the RTP/RTCP packets.

Now starting from **fig.11** to **fig.15b** the Session Establishment/Rejected scenario is discussed from the point of view of messages and interactions. As reported in fig.11, user A contacts PTW SM to start a session sending a SIP (1) INVITE message to the PTW SM with the list of the user to invite (i.e. invited "public user identity"). The PTW SM acts as a back to back user agent and sends a SIP INVITE message (2) to the invited users (one SIP INVITE message for each invited user). The SIP (2) INVITE contains:
- a list including the Public user identity of each user invited to the session except for the recipient;
- a list including the Public user identity of each user already in the session (if any) except for the inviting one.
**Note:** This distinction provides the information of the users already in the session not available in the standard specifications.

The inviter user receives a SIP MESSAGE(refer) (3) with the response (invite accepted or declined) from the invited users (one for each invited user). If more than one participant has been invited, a SIP MESSAGE(ok) (4) is also sent to them to inform about the identity of the other participants of the session. For this purpose, MESSAGE(ok) contains a list of Invited "user's Public User Identity" except for the recipient user address. Now, the session has been placed and the PTW SM has to pass some parameters to the MCDF the element that has in charge of managing properly the duplication of the data and the FLOOR protocol. For this purpose, the PTW SM sends a CREATE_SESS message (5) to the MCDF. After the floor assignment, the users can exchange audio and video streams.

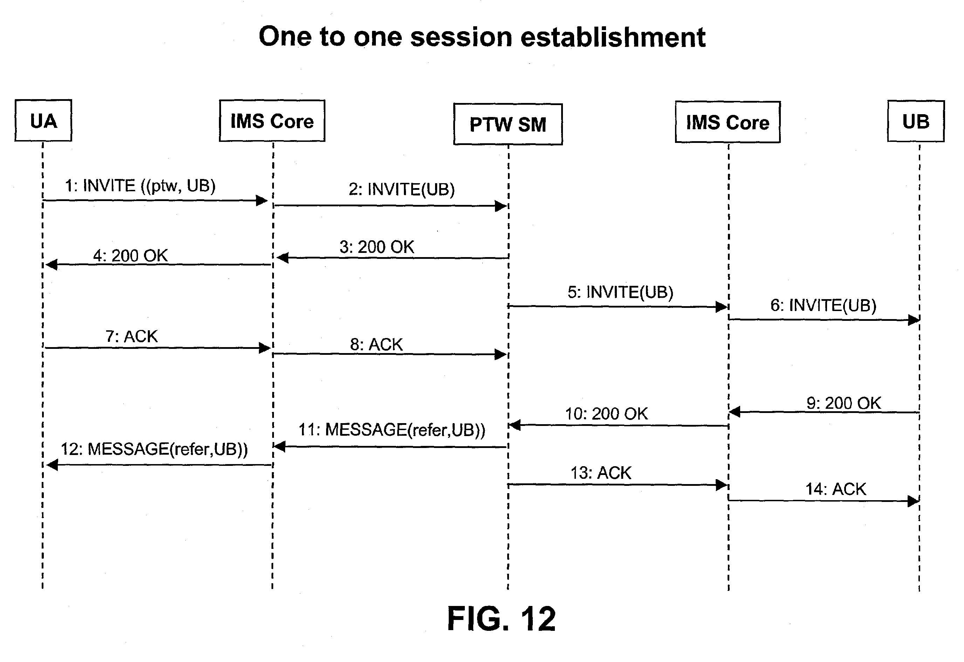

The message sequence chart of the **"One to One session establishment procedure"** is depicted in **fig.12.** On top of the figure the following network elements end-to-end involved with the procedure are located from left to right: UA, IMS Core, PTW SM, IMS Core, and UB. SIP 1xx messages usage is in line with the specifications, thus they have been omitted for better understanding of the picture. As precondition, the user shall be registered successful to the network.

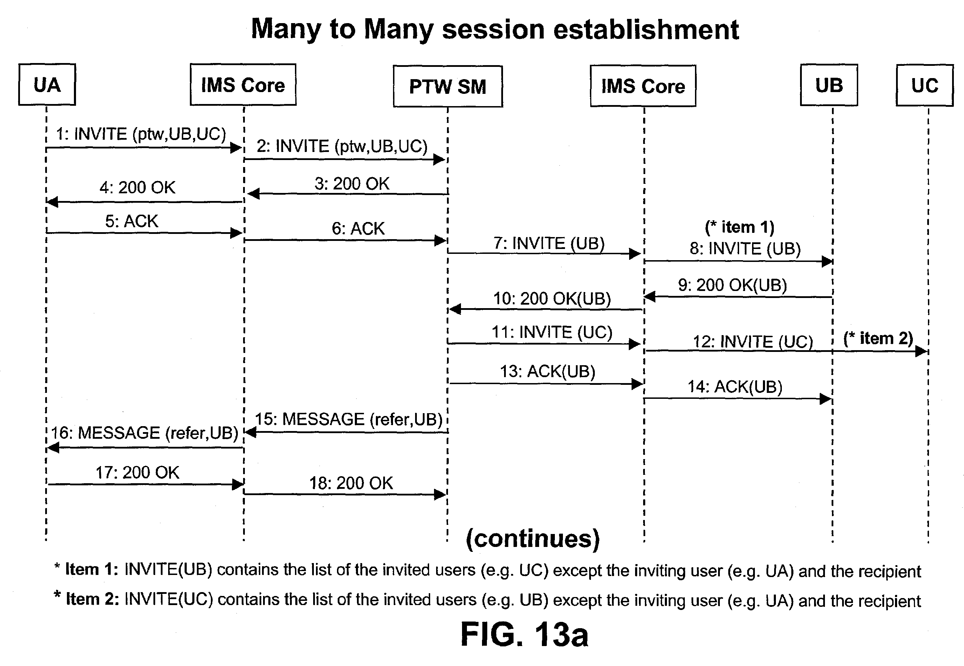

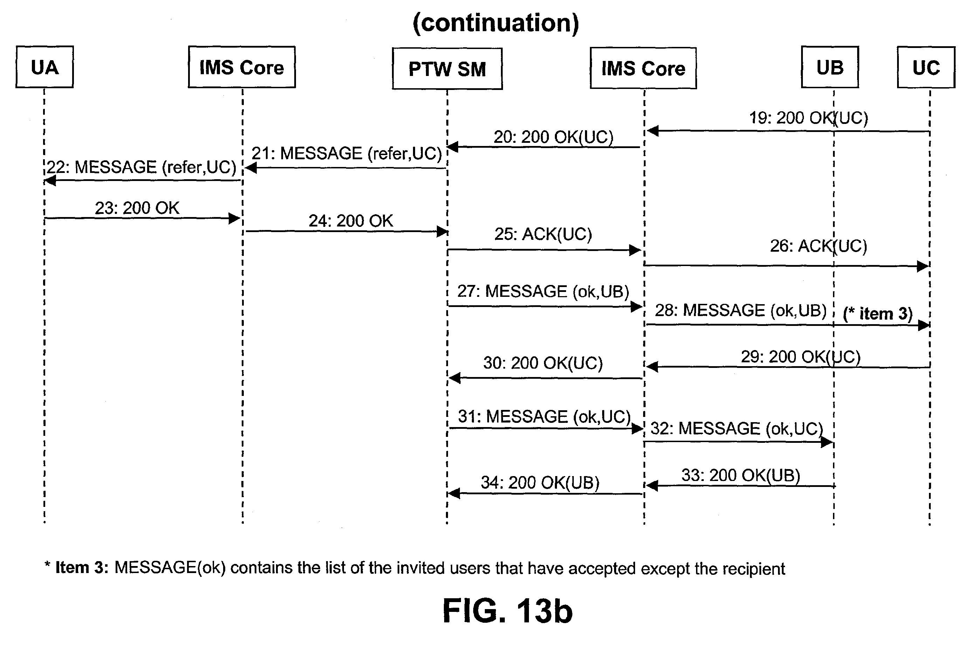

The message sequence chart of the **"Many to Many session establishment procedure"** is depicted in **fig.13a** and **13b.** An additional element UC is added on top. This figure has been taken as reference for the description of the signalling parameters.
SIP INVITE Request [1.INVITE].
The following SIP INVITE request includes the mandatory parameters defined in **[RFC3261]** with the clarifications and additions specific to PTW SM.

| **Item** | **Header** | **Mandatory/optional** | **The procedure specific values of the parameter** |
|---|---|---|---|
| 1 | Request-Uri | M | sip:ptw@ims.mobilab.it (service contact address). |
| 2 | To | M | sip:ptw@imses.mobilab.it (service contact address). |
| 3 | From | M | Inviting user's Public User Identity |
| 4 | Via | M | As specified in [RFC3261] |
| 5 | Call ID | M | As specified in [RFC3261] |
| 6 | Conference-ID | M | Identification of the session (i.e. ad hoc group identity) |
| 7 | CSeq | M | As specified in [RFC3261] |
| 8 | Proxy-Authorization | M | IMS_GPRS_SCHEMA token="<token value>" |
| 9 | Contact | M | As specified in [RFC3261] |
| 10 | Max-Forwards | M | As specified in [RFC3261] |
| 11 | Content-Length | M | The length of the message body |
| 12 | Content-Type | M | multipart/mixed |
| | Content-Type | M | application/sdp |
| | Content-Type | M | application/vnd.ptw.refer-to |
| | .SDP body and Refer-To: "Public user identity of invited user" (it is a list of Refer-to) | | |

SIP 200 OK(INVITE) Response [3. 200 OK].
The following SIP 200 OK response includes the mandatory parameters defined in the **[RFC3261]** with the clarifications and additions specific to PTW SM.

| **Item** | **Header** | **Mandatory/ optional** | **The procedure specific values of the parameter** |
|---|---|---|---|
| 1 | Conference-ID | M | Identification of the session (i.e. ad hoc group identity) |
| 2 | Content-Type | M | application/sdp |
| | SDP Body | | |

The same for SIP [4.200 OK], SIP [9.200 OK], SIP [10.200 OK], SIP [19. 200 OK], SIP [20.200 OK].
SIP ACK Request [5. ACK].
The following SIP ACK Request includes the mandatory parameters defined in the [**RFC3261]** with the clarifications and additions specific to PTW SM.

| **Item** | **Header** | **Mandatory/optional** | **The procedure specific values of the parameter** |
|---|---|---|---|
| 1 | Conference-ID | M | Identification of the session (i.e. ad hoc group identity) |
| 8 | Proxy-Authorization | M | IMS_GPRS_SCHEMA token="<token value>" |

The same for SIP [6. ACK] requests.
SIP INVITE Request [7. INVITE].
The following SIP INVITE Request includes the mandatory parameters defined in the **[RFC3261]** with the clarifications and additions specific to PTW SM.

| **Item** | **Header** | **Mandatory/ optional** | **The procedure specific values of the parameter** |
|---|---|---|---|
| 1 | Request-Uri | M | The invited user's contact address |
| 2 | To | M | The invited user's contact address |
| 3 | From | M | Inviting user's Public User Identity |
| 4 | Via | M | As specified in [RFC3261] |
| 5 | Call ID | M | As specified in [RFC3261] |
| 6 | Conference-ID | M | Identification of the session (i.e. ad hoc group identity) |
| 7 | CSeq | M | As specified in [RFC3261] |
| 9 | Contact | M | As specified in [RFC3261] |
| 10 | Referred-By | M | The public user Identity of the inviting user' |
| 11 | Max-Forwards | M | As specified in [RFC3261] |
| 12 | Content-Length | M | The length of the message body |
| 13 | Content-Type | M | multipart/mixed |
| | Content-Type | M | application/sdp |
| | Content-Type | O | application/vnd.ptw.refer-to |
| | Content-Type | M | text/plain |
| | .SDP body and | | |
| | Refer-To: Public user identity of the user invited to the session except for the recipiant user address (It is a list of "Refer-To:"). | | |
| | To: Public user identity of the users already in the session (if any) except for the inviting user address (it is a list of "To:") | | |

The same for SIP [8.INVITE], SIP [11.INVITE], SIP [12.INVITE].
Note: the introduction of the list of "To:" in the Content-type text/plain header, provides the information of the users already in the session not available in the standardization descriptions.
SIP ACK Request [13. ACK].
The following SIP ACK Request includes the mandatory parameters defined in the **[RFC3261]** with the clarifications and additions specific to PTW SM.

| **Item** | **Header** | **Mandatory/optional** | **The procedure specific values of the parameter** |
|---|---|---|---|
| 1 | Conference-ID | M | Identification of the session (i.e. ad hoc group identity) |

The same for SIP [14. ACK], [25. ACK], [26. ACK] requests.
SIP MESSAGE(refer) Request [15. MESSAGE(refer)].
As reported above, SIP MESSAGE(refer) is implemented instead of SIP NOTIFY(event=refer) message for the reasons reported in the previous description.
PTW SM sends [15. MESSAGE(refer)] request when [8. 200 OK] arrives to the server. The following SIP MESSAGE(refer) request includes the mandatory parameters defined in **[RFC3515]** and **[RFC3261]** with the clarifications and additions specific to PTW SM.

| **Item** | **Header** | | **Mandatory/optional** | **The procedure specific values of the parameter** |
|---|---|---|---|---|
| 1 | Request-Uri | | M | sip:'Inviting user's UE contact address' |
| 2 | Via | | M | As specified in [RFC3261] |
| 3 | To | | M | sip:'Inviting user's UE contact address' |
| 4 | From | | M | sip:ptw@ims.mobilab.it (service contact address) |
| 5 | Call ID | | M | As specified in [RFC3261] |
| 6 | Conference-ID | | M | Identification of the session (i.e. ad hoc group identity) |
| 7 | Max Forwards | | M | As specified in [RFC3261] |
| 8 | Cseq | | M | As specified in [RFC3261] |
| 9 | Subject | | M | refer: see NOTE 2 |
| 10 | Subscription-State | | M | NOTE 1 |
| 11 | Content length | | M | |
| 12 | Content-Type | | M | message/sipfrag;version=2.0 |
| 13 | SIP/2.0 200 OK or SIP/2.0 'reject code, for example: 486 Busy' | | | |
| | To: | Invited user's Public User Identity | | |
| NOTE 1: Subscription is "Active" if there is an outstanding final response from a user being invited. Subscription is "Terminated" if the last final response (considering all the users being invited) has been received. | | | | |
| NOTE 2: Depending from the meaning of the SIP MESSAGE (refer,ok, bye) in the service. | | | | |

The same for every SIP MESSAGE(refer) requests.
SIP 200 OK(MESSAGE) Response [17. 200 OK].
The following SIP 200 OK response includes the mandatory parameters defined in the [RFC3261] with the clarifications and additions specific to PTW SM.

| **Item** | **Header** | **Mandatory/optional** | **The procedure specific values of the parameter** |
|---|---|---|---|
| 1 | Conference-ID | M | Identification of the session (i.e. ad hoc group identity) |

The same for SIP [18. 200 OK], SIP [23. 200 OK], SIP [24. 200 OK], SIP [29. 200 OK],
SIP [30. 200 OK], [33. 200 OK], [34. 200 OK].
SIP MESSAGE(ok) Request [27. MESSAGE(ok)].
PTW SM sends the following [27. MESSAGE(ok)] request when all the invited users have sent to the server a final response.

| **Item** | **Header** | | **Mandatory/ optional** | **The procedure specific values of the parameter** |
|---|---|---|---|---|
| 1 | Request-Uri | | M | sip:'Invited user's UE contact address' |
| 2 | Via | | M | As defined in [RFC3261] |
| 3 | To | | M | sip:'Invited user's UE contact address' |
| 4 | From | | M | sip:ptw@ims.mobilab.it (service contact address) |
| 5 | Call ID | | M | As specified in [RFC3261] |
| 6 | Conference-ID | | M | Identification of the session (i.e. ad hoc group identity) |
| 8 | Cseq | | M | As specified in [RFC3261] |
| 9 | Subject | | M | ok NOTE 1 |
| 10 | Content length | | M | Length of the body |
| 11 | Content-Type | | M | text/plain |
| 12 | | | | |
| | To: | Sip:"Invited user's Public User Identity"except for the recipient user address (it is a list of "To:") | | |
| NOTE 1: Depending from the meaning of the SIP MESSAGE (refer,ok, bye) in the service. | | | | |

The same for every SIP MESSAGE(ok) requests.
Note: As already reported above, SIP MESSAGE(ok) is implemented instead of SIP NOTIFY(event=group-event) message because the specification of the explicit subscription procedure fro group event is still in progress within the standardization body (i.e. OMA) and for the advantages reported in the previous description.

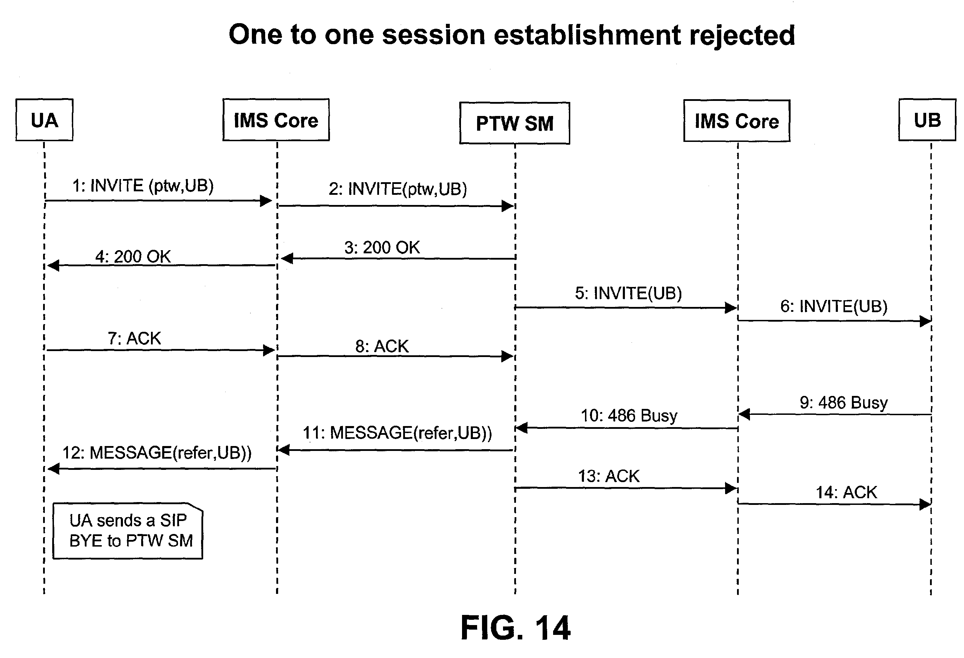

The message sequence chart of the "One to One Session Establishment **rejected procedure"** is depicted in **fig.14.** The service interactions for procedure have already been described with reference to **fig.11.** In the case of **fig.14** the UB rejects the invitation from UA, UA sends a SIP BYE, as will be described afterwards and the session is not placed. SIP 1xx messages usage is in line with the specifications, thus they have been omitted for better understanding of the picture.

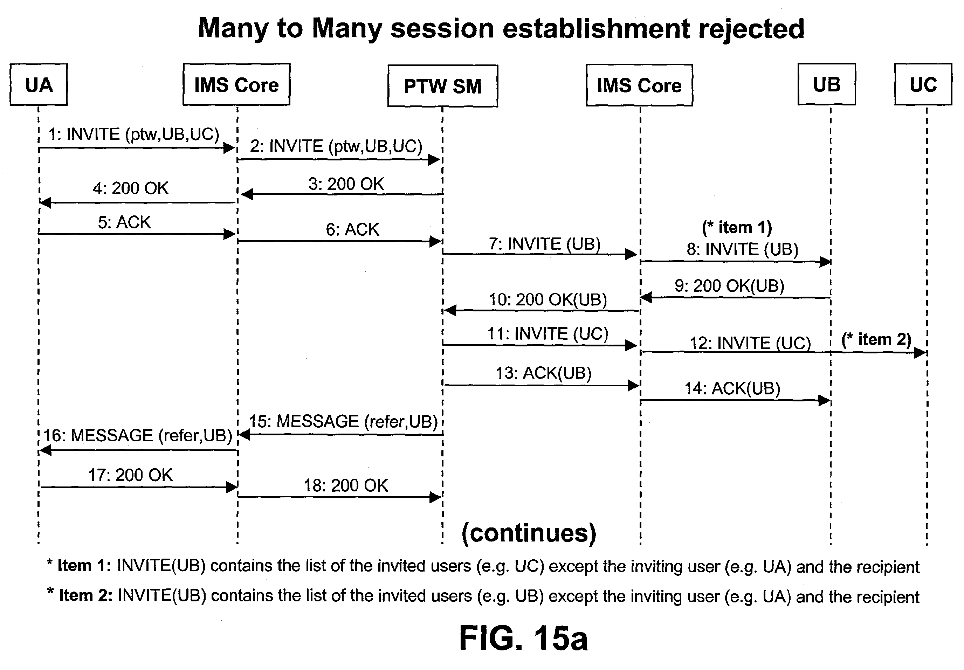

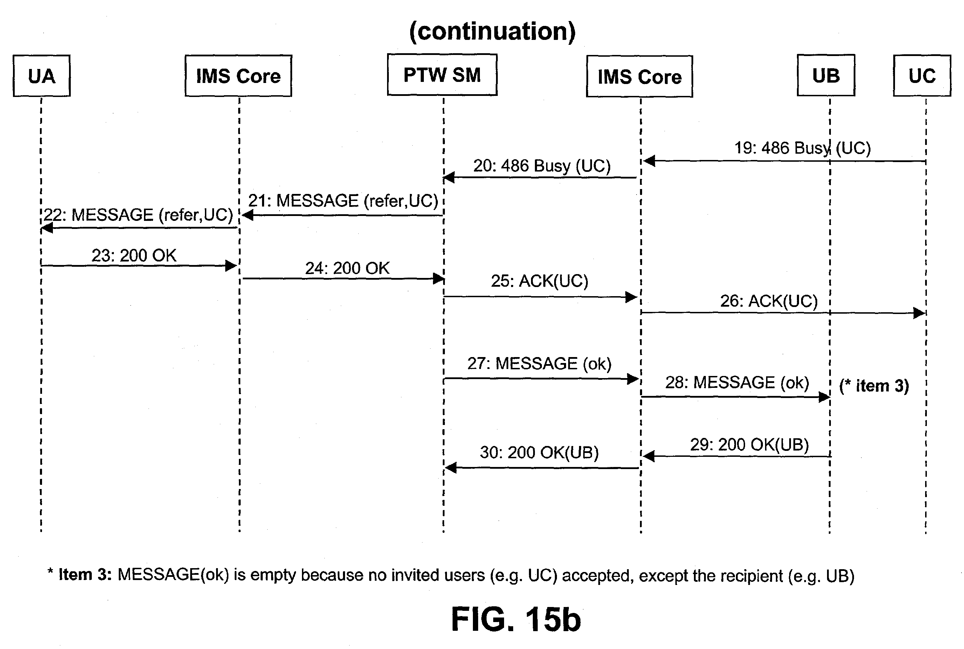

The message sequence chart of the **"Many to Many Session Establishment rejected procedure"** is depicted in **fig.15a** and **15b.** The service interactions for procedure has already been described with reference to **fig.11.** As precondition, the user shall be registered successfully to the network. In the case of **fig.11** user A invites B and C, user B accepts and C rejects. As described above, the SIP MESSAGE(ok) contains the list of the users that has accepted to join the session, except the recipient. In the present case the "To:" list in [27.MESSAGE(ok)] is empty because the other invited user has rejected the invitation. **Fig.15a** and **15b.** have been taken as reference for the description of the signaling parameters. The following messages are the same as the corresponding ones in the **figures 13a** and **13b:**
SIP INVITE Request [1. INVITE], SIP [2. INVITE] request, SIP 200 OK(INVITE) Response [3. 200 OK], SIP [4.200 OK], SIP [7.200 OK], SIP [8.200 OK] response, SIP ACK request [5. ACK], every SIP [6. ACK] request, SIP INVITE Request [7. INVITE], SIP [8.INVITE], [11.INVITE], [12.INVITE], SIP ACK request [13. ACK], every SIP [14. ACK], [25. ACK], [26. ACK] request, SIP MESSAGE(refer) Request [15. MESSAGE(refer)], every SIP MESSAGE(refer) request.
If only the inviter remains in the session, when the MESSAGE(refer) arrives, he performs the "Release session procedure", as specified afterwards.
SIP 200 OK(MESSAGE) Response [18. 200 OK], SIP [19. 200 OK], [23. 200 OK], [24. 200 OK], [29. 200 OK], and [30. 200 OK] response: as the corresponding ones in the **figures 13a** and **13b.**
SIP 486 Busy Response [19. Busy 486].
The following SIP final response 3xx, 4xx, 5xx, 6xx and in particular 486 Busy, includes the mandatory parameters defined in **[RFC3261]** with the clarification in addition:

| **Item** | **Header** | **Mandatory/ optional** | **The procedure specific values of the parameter** |
|---|---|---|---|
| 1 | Conference-ID | M | Identification of the session (i.e. ad hoc group identity) |

The same for SIP [20. Busy 486].
Every SIP MESSAGE(ok) request: as the corresponding ones in the **figures 13a** and **13b.**

Now starting from **fig.16** to **fig.19** the Add/Rejected new user scenario is discussed from the point of view of messages and interactions. The Add User procedure allows a user to add new parties to an existing established one-to-one or many-to-many PTW session As reported in **fig.16,** User A and User B are already in the same session. User A wants to add two new users (i.e. user C and user D) to the session, thus UA sends the SIP MESSAGE(refer) (1) to the PTW SM with the SIP user identifier of userC and userD. After that, as described in the "session establishment procedure", the PTW SM sends a SIP INVITE message (2) to the selected users. The PTW SM sends the SIP MESSAGE(refer) (3) to the inviter (one for each invited users) and SIP MESSAGE(ok) to the other participants (already in the session and just added) in order to inform everybody that new users have been added in the session. Finally the PTW SM interacts with the MCDF sending ADD_USER message informing that one of more users have been added to the session and are ready to transmit or receive audio/video real time contents.

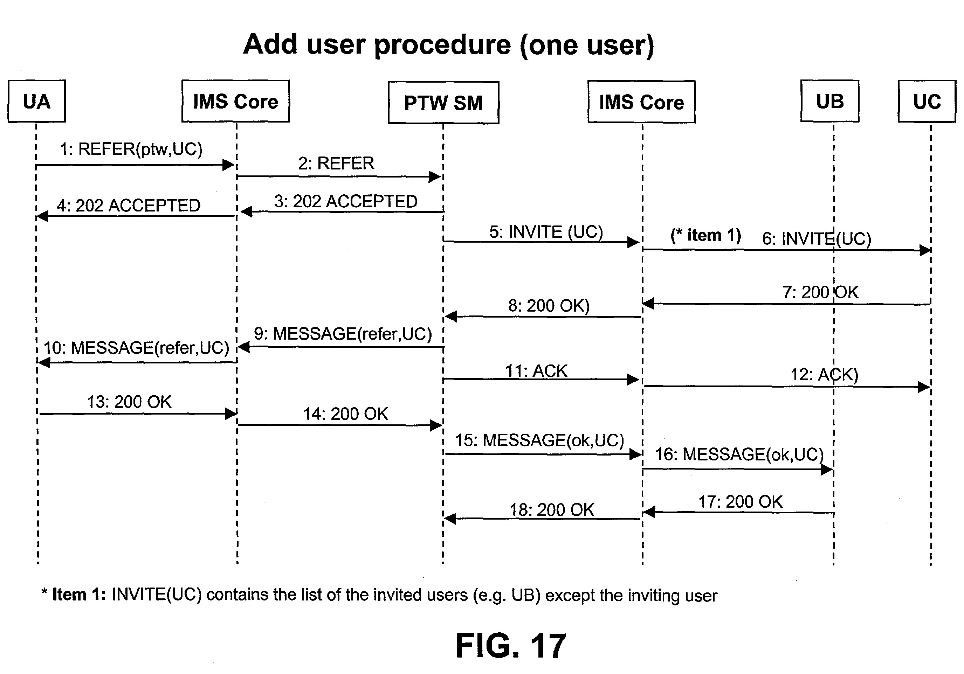

The message sequence chart of the **"Add User procedure (one user)"** is depicted in **fig.17.** On top of the figure the following network elements end-to-end involved with the procedure are located from left to right: UA, IMS Core, PTW SM, IMS Core, and UB. SIP 1xx messages usage is in line with the specifications, thus they have been omitted for better understanding of the picture. As precondition, the users shall be registered successfully to the network and the inviter is a participant of a session in progress. The picture shows the user A and user B in session; user A add user C in the session in progress and user C accepts.

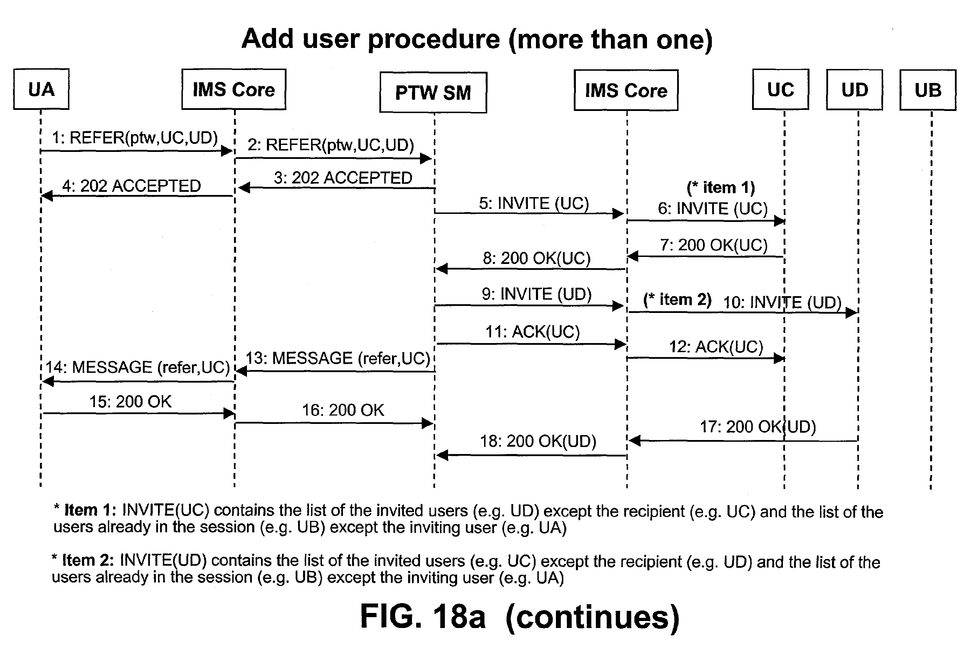

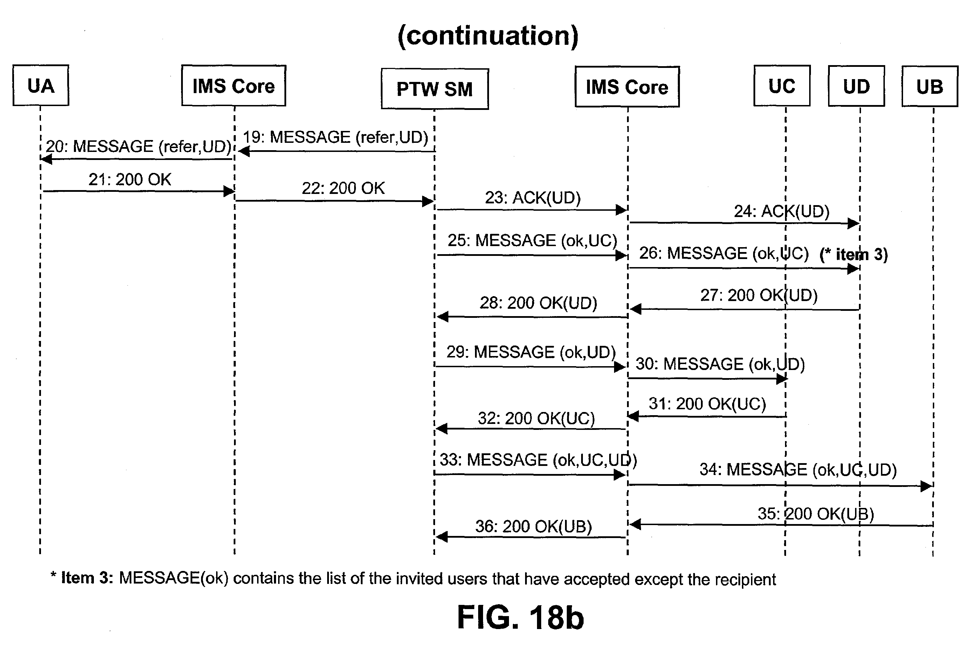

The message sequence chart of the **"Add User procedure (more than one)"** is depicted in **fig.18a** and **18b.** An additional element UD is added on top. Concerning the two Add user procedures, the various signalling messages are given hereafter.
The SIP 1xx messages are in line with the **[RFC3261]** specification.
SIP REFER request message [1. REFER].
The following SIP REFER message includes the mandatory parameters defined in **[RFC3515]** and **[RFC3261]** with the clarifications and additions specific to PTW SM.

| **Item** | **Header** | **Mandatory/optional** | **The procedure specific values of the parameter** |
|---|---|---|---|
| 1 | Request-Uri | M | sip:ptw@ims.mobilab.it (service contact address) |
| 2 | Via | M | As specified in [RFC3261] |
| 3 | To | M | sip:ptw@imses.mobilab.it (service contact address) |
| 4 | From | M | sip:'Inviting user's UE contact address' |
| 5 | Call ID | M | As specified in [RFC3261] |
| 6 | Proxy-Authorization | M | IMS_GPRS_SCHEMA token="<token value>" |
| 7 | Conference-ID | M | Identification of the session (i.e. ad hoc group identity) |
| 8 | Cseq | M | As specified in [RFC3261] |
| | | | |
| 10 | Refer-To | M | <sip: "invited user's UE contact address" NOTE 1 |
| 11 | Content length | M | |
| 12 | Content-Type | M | application/vnd.ptw.refer-to |
| 13 | Refer-To: "invited user's UE contact address if more than one" (it is a list of Refer-To") | | |
| | | | |
| NOTE 1: it is a header specific of the service. | | | |

The same for SIP [2. REFER].
SIP 202 Accepted Response [3. 202 Accepted].
The following SIP 202 Accepted response includes the mandatory parameters defined in the [RFC3261] with the clarifications and additions specific to PTW SM.

| **Item** | **Header** | **Mandatory/optional** | **The procedure specific values of the parameter** |
|---|---|---|---|
| 1 | Conference-ID | M | Identification of the session (i.e. ad hoc group identity) |

The same for SIP [4.202 Accepted]. The following messages are also the same as the corresponding ones in the **figures 13a** and **13b:**
SIP INVITE request [5.INVITE], SIP [6. INVITE] request, SIP [7. 200 OK], SIP [8. 200 OK], [17. 200 OK], [18. 200 OK] response, SIP ACK request [11. ACK] and every SIP ACK requests, SIP [13. MESSAGE(refer)] and every SIP MESSAGE(refer)] request.
**Note:** SIP MESSAGGE(refer) has been used instead of SIP NOTIFY(refer) for the reasons reported in the previous description.
SIP 200 OK (MESSAGE) response[15. 200 OK], SIP [16. 200 OK], [21. 200 OK], [22. 200 OK], [27. 200 OK], [28. 200 OK], [31. 200 OK], [32. 200 OK], [35. 200 OK], [36. 200 OK] response, SIP MESSAGE(ok) request [15. MESSAGE(ok)] and every SIP MESSAGE(ok), as previously specified (see notes in the figure).

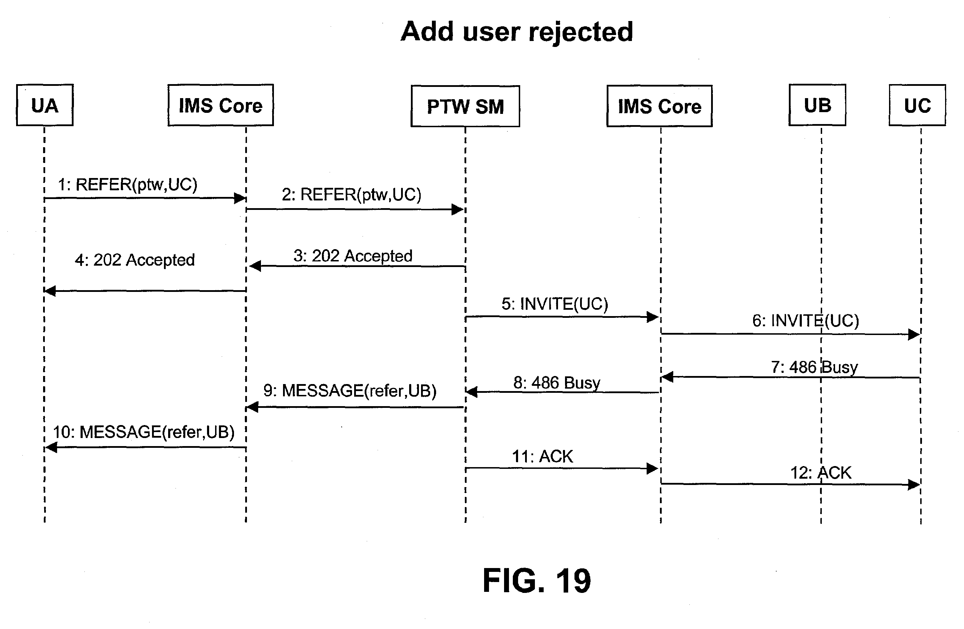

The scenario for "Add User rejected procedure" is still the one depicted in **fig.16,** but in this case UC rejects the invitation from UA. UA and UB are still in session. The message sequence chart of the **"Add User rejected procedure"** is depicted in **fig.19.** With reference to the figure:
SIP 1xx messages usage is in line with the [RFC3261] specification, thus they have been omitted for better understanding of the picture.
SIP REFER [1. REFER] request, SIP [2. REFER], SIP 202 Accepted [2. 202 Accepted] response, SIP INVITE [5. INVITE] request, SIP [6. INVITE], SIP ACK [7. ACK] request, and SIP [12. ACK] request, as previously specified.

Now starting from **fig.20** to **fig.22** the Leaving Session scenario is discussed from the point of view of messages and interactions. With reference to **fig.20,** User A wants leave the session, then he contacts PTW SM sending a SIP BYE message (1). The other users will be notified by a SIP MESSAGE(bye) (2) that user A left the session. When user A leaves the session the other users remain connected. The PTW SM informs MCDF that user A is leaving by DEL_USER message. The session is closed if only one user remains in the session. In this case, the user sends a SIP BYE message to the PTW SM, then it will send to the MCDF a DEL_SESS message also.

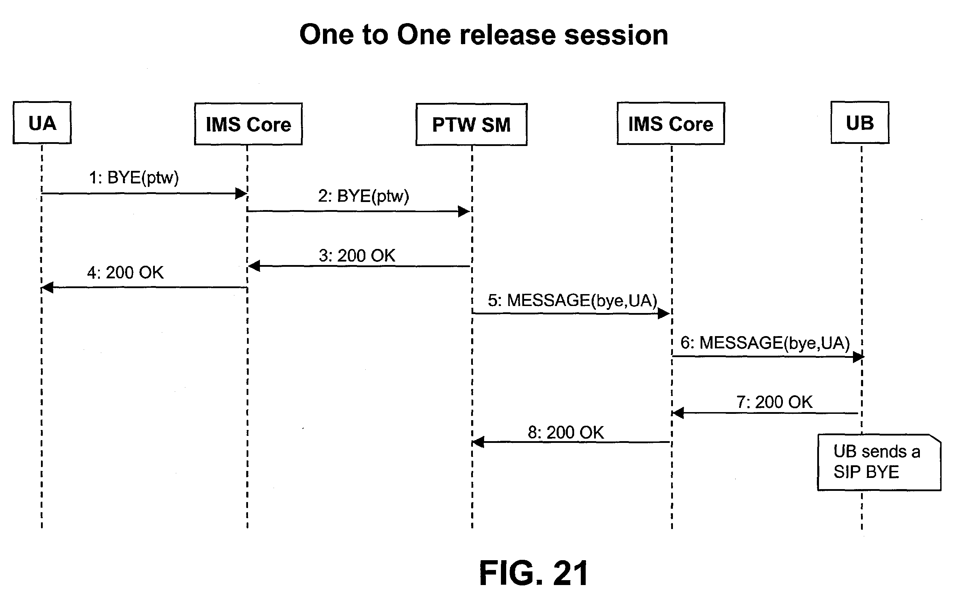

The message sequence chart of the **"One to One release session procedure"** is depicted **in fig.21.**

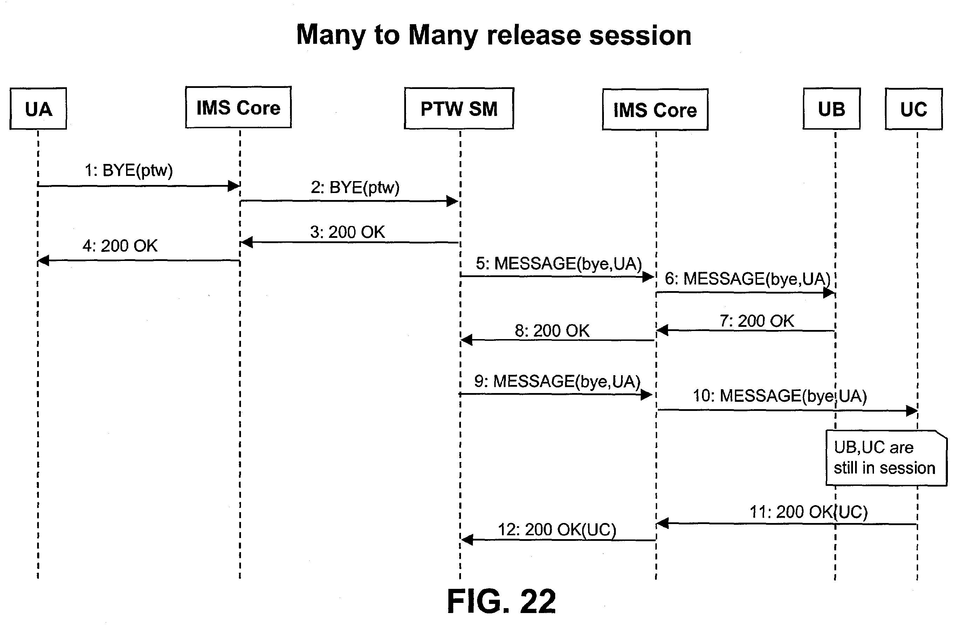

The message sequence chart of the **"Many to Many release session procedure"** is depicted in **fig.22,** this figure will be taken as reference for the description of the signalling parameters. As precondition, the user shall be registered successfully to the network and the session is in progress. With reference to **fig.22,** SIP 1xx messages usage is in line with the specifications, thus they have been omitted for better understanding of the picture.
The following SIP BYE [1. BYE] request includes the mandatory parameters defined in [[RFC3261] with the clarifications and additions specific to the PTW SM. The same for SIP [2.BYE] request.

| **Item** | **Header** | **Mandatory/ optional** | **The procedure specific values of the parameter** |
|---|---|---|---|
| 1 | Conference-ID | M | Identification of the session (i.e. ad hoc group identity) |
| 2 | Proxy-Authorization | M | IMS_GPRS_SCHEMA token="<token value>" |

SIP 200 OK Response [3. 200 OK] and every SIP 200 OK response, as previously specified.
The following SIP MESSAGE(bye) request [5. MESSAGE(bye)]. The SIP MESSGE(bye) includes the mandatory parameters defined in **[RFC3261]** with the clarifications and additions specific to PTW SM.

| **Item** | **Header** | | **Mandatory/optional** | **The procedure specific values of the parameter** |
|---|---|---|---|---|
| 1 | Request-Uri | | M | sip:'UE contact address' |
| 2 | Via | | M | As defined in [RFC3261] |
| 3 | To | | M | sip: 'UE contact address' |
| 4 | From | | M | sip:ptw@ims.mobilab.it (service contact address) |
| 5 | Call ID | | M | As specified in [RFC3261] |
| 6 | Conference-ID | | M | Identification of the session (i.e. ad hoc group identity) |
| 8 | Cseq | | M | As specified in [RFC3261] |
| 9 | Subject | | M | bye NOTE 1 |
| 10 | Content length | | M | Length of the body |
| 11 | Content-Type | | M | text/plain |
| 12 | | | | |
| | To: | Sip:"Leaving user's Public User Identity" | | |
| NOTE 1: Depending from the meaning of the SIP MESSAGE (refer,ok, bye). | | | | |

the field To contains a list including the public identity of each participant which has left the session. If only one participant remains in the session, he sends a SIP BYE message to the P2S MIM server and the session is deleted.

### USED ACRONYMS

3GPP - 3^{rd} Generation Partnership Program
AMR - Adaptive Multi-rate
API - Application Programming Interface
BGCF - Breakout Gateway Control Function
CDR - Charging Data Record
CSCF - Call State Control Function
DHCP - Dynamic Host Configuration Protocol
DNS - Domain Name Server
GGSN - Gateway GPRS Support Node
HSS - Home Subscriber Server
I-CSCF - Interrogating CSCF
IETF - Internet Engineering Task Force
IM-MGW - IP Multimedia Media Gateway Function
IMS - IP Multimedia core network Subsystem
MCDF - Media Control and Duplication Function
MGCF - Media Gateway Control Function
MRF - Multimedia Resource Function
MRFC - MRF Controller
MRFP - MRF Processor
OMA - Open Mobile Alliance (http://www.openmobilealliance.org)
PC - Personal Computer
PCF - Policy Control Function
P-CSCF - Proxy/Presence CSCF
PTT - Push To Talk
PTW - Push To Watch
QoS - Quality of Service
RFC - Request for Comments
RNC - Radio Network Controller
RTCP - Real-time Transport Control Protocol
RTP - Real-time Transport Protocol
S-CSCF - Serving CSCF
SGSN - Serving GPRS Support Node
SIP - Session Initiation Protocol
TCP - Transport Control Protocol
TS - Technical Specification
UDP - User Datagram Protocol
UE - User Equipment
URI - Uniform Resources Identifier

### REFERENCES

- [3GPP_NetArch]: 3GPP TS 23.002 V 6.1.0 , "Network Architecture, Release 5", (June 2003).
- [3GPP_ServReq]: 3GPP TS 22.228 V 6.5.0, "Service requirements for the Internet Protocol (IP) multimedia core network subsystem"; Stage 1, Release 6", (January 2004).
- [3GPP_IMS]: 3GPP TS 23.228 V 6.5.0, "IP Multimedia Subsystem (IMS), Release 6", (March 2004).
- [PoC_Arch]: Push-to-Talk over Cellular (PoC): Architecture 1.1.0 (August 2003).
- [PoC_Req]: Push-to-Talk over Cellular (PoC): User Requirements: Poc Release 1.1.0 (August 2003).
- [PoC_Sign]: Push-to-Talk over Cellular (PoC) Signalling Flow: Poc Release 1.1.3 (August 2003).
- (PoC_User]: Push-to-Talk over Cellular (PoC) User Plane Transport Protocols; PoC Release 1.1.0 (August 2003).
- [RFC3261]: IETF RFC 3261 "Sip Initiator Protocol", June 2002.
- [RFC3265]: IETF RFC 3265 "Session Initiation Protocol (SIP) Specific Event Notification", A. B. Roach, June 2002.
- [RFC3428]: IETF RFC 3428 "Session Initiation Protocol (SIP) Extension for Instant Messaging", H. Schulzrinne, et al., December 2002
- [RFC3515]: IETF RFC 3515 "The Session Initiation Protocol (SIP) Refer Method", R. Sparks, April 2003
- [RFC0768]: IETF RFC 0768 or STD 0006, "User Datagram Protocol", J. Postel, Aug. 28 1980
- [RFC0793]: IETF RFC 0793 or STD 0007, "Transmission Control Protocol", J. Postel, Sept. 01 1981
- [RFC3550]: IETF RFC 3550, "RTP: A Transport Protocol for Real-Time Applications", H. Schulzrinne, S. Casner, R. Frederick, V. Jacobson, July 2003.

## Claims

1. Multimedia and real time communication protocol running inside a SIP based infrastructure (IMS) integrated with a PLMN's core network to provide multimedia services inside the coverage area sending SIP messages like SIP INVITE, SIP MESSAGE, etc., the protocol including the steps of:
• receiving a SIP INVITE request message from an user interested to establish a SIP protocol session by addressing one or more other users of an ad hoc group,
• issuing a SIP INVITE request message to each user invited to the session and introducing in the content of this message a notification list including the public user identity of each other user invited to the session,
• receiving the response either of accepting or denying the invite from each user invited to the session and notifying said responses to the inviter and to the other invited users,
**characterized in that** said SIP message MESSAGE, is specialized and identified with the following labels included into the header field named Subject;
• "refer"
• "ok" and
• "bye",
so specifying the informative content of the standard SIP MESSAGE. message.

2. The protocol of the claim 1, **characterized in that** a further list including the Public user identity of each user already in the session except the inviting is embedded in the message body content of said SIP INVITE request message.

3. The protocol of the claim 1 or 2, **characterized in that** in correspondence of the session establishment a first one of said labels is used by each SIP MESSAGE request (MESSAGE(refer)) to notify the inviter of the response from the invited user embedded into the SIP MESSAGE request body content.

4. The protocol of the claim 1 or 2, **characterized in that** in correspondence of the session establishment a second one of said labels is used by each SIP MESSAGE request (MESSAGE(ok)) to notify each invited user and each users already in the session, except for the inviter, of the response from the considered invited user embedded into the SIP MESSAGE request body content.

5. The protocol of the claim 4, **characterized in that** said response contains a list including the public user identity of each other invited user that has accepted.

6. The protocol of one of the preceding claims, **characterized in that** includes the step of receiving a SIP REFER request message from an user interested to add up one or more new users to an already established session and issuing a SIP INVITE request message to each new user to be added to the session.

7. The protocol of the preceding claim when it depends on claim 3, **characterized in that** said first labels is used by each SIP MESSAGE request (MESSAGE(refer)) to notify the inviter of the response from each new invited user embedded into the SIP MESSAGE request body content.

8. The protocol of the claim 6 when it depends on claim 4, **characterized in that** said second labels is used by each SIP MESSAGE request (MESSAGE(ok)) to notify each user of the response from the considered new invited user embedded into the SIP MESSAGE request body content.

9. The protocol of the preceding claim, **characterized in that** said response contains a list including the public user identity of each other new invited user that has accepted.

10. The protocol of one of the preceding claims, **characterized in that** includes the further steps of:
• receiving a SIP BYE request message from each user interested to leave the current session;
• issuing to all the participants staying in the session as many SIP request messages of the type MESSAGE (MESSAGE(bye)) having a third labels used to notify the BYE request from a leaving user;
• embedding in the body content of each SIP MESSAGE request (MESSAGE(bye)) the public identity of the participant which has left the session.

11. The protocol of one of the preceding claims, **characterized in that** the user terminal which establishes the session generates the value of a Conference identifier parameter indicating the common session identifier included in the header field Conference-ID of all the SIP messages relevant to that session.

12. An application server (PTW SM), named hereafter PTW server, having processing and memory means adapted to:
• operate inside a SIP based infrastructure (IMS) integrated in a PLMN core network to provide multimedia services inside the coverage area sending SIP messages like SIP INVITE, SIP MESSAGE, etc.;
• receive a SIP INVITE request message from an user interested to establish a multimedia session by addressing one or more other users of an ad hoc group,
• issue a SIP INVITE request message to each user invited to the session and introduce in the content of this message a notification list including the public user identity of each other user invited to the session,
• receive the response either of accepting or denying the invite from each user invited to the session and notify said responses to the inviter and to the other invited users,
**characterized in that** said SIP message MESSAGE, is specialized and identified with the following labels included into the header field named Subject;
• "refer"
• "ok" and
• "bye",
•
so specifying the informative content of the standard SIP MESSAGE. Message.

13. The application server (PTW SM) of the claim12, **characterized in that** said processing and memory means are also adapted to embed into the body content of said SIP INVITE request message a further list including the Public user identity of each user already in the session except the inviting.

14. The application server (PTW SM) of the claim 12 or 13, **characterized in that** in correspondence of the session establishment said processing and memory means are also adapted to use a first one of said labels of each SIP MESSAGE request (MESSAGE(refer)) to notify the inviter of the response received from each invited user embedded into the respective SIP MESSAGE request body content.

15. The application server (PTW SM) of the claim 12 or 13, **characterized in that** in correspondence of the session establishment said processing and memory means are also adapted to use a second one of said labels of each SIP MESSAGE request (MESSAGE(ok)) to notify each invited user and each user already in the session, except for the inviter, of the response from the considered invited user embedded into the SIP MESSAGE request body content.

16. The application server (PTW SM) of the claim 15, **characterized in that** said response contains a list including the public user identity of each other invited user that has accepted.

17. The application server (PTW SM) of one of the preceding claims from the claim 12, **characterized in that** said processing and memory means are also adapted to receive a SIP REFER request message from an user interested to add up one or more new users to an already established session and to issue a SIP INVITE request message to each new user to be added to the session.

18. The application server (PTW SM) of the preceding claim when it depends on claim 14, **characterized in that** said processing and memory means are also adapted to use said first label of each SIP MESSAGE request (MESSAGE(refer)) to notify the inviter of the response from each new invited user embedded into the SIP MESSAGE request body content.

19. The application server (PTW SM) of the claim 17 when it depends on claim 15, **characterized in that** said processing and memory means are also adapted to use said second label of each SIP MESSAGE request (MESSAGE(ok)) to notify each invited user, and each users already in the session, of the response from the considered new invited user embedded into the SIP MESSAGE request body content.

20. The application server (PTW SM) of the preceding claim, **characterized in that** said response contains a list including the public user identity of each new other invited user that has accepted.

21. The application server (PTW SM) of one of the preceding claims from claim 12, **characterized in that** said processing and memory means are also adapted to:
• receive a SIP BYE request message from at least an user interested to leave the current session;
• issue to all the participants staying in the session as many SIP request messages of the type MESSAGE (MESSAGE(bye)) having a third label used to notify said BYE request;
• embed into each SIP MESSAGE request (MESSAGE(bye)) body content the public identity of the participant which has left the session.

22. The application server (PTW SM) of one of the preceding claims from claim 12, **characterized in that** the user terminal which establishes the session generates the value of a Conference identifier parameter indicating the common session identifier included in the header field Conference-ID of all the SIP messages relevant to that session.

23. Extended SIP request message of the type MESSAGE (MESSAGE(refer), MESSAGE(ok)), MESSAGE(bye) designed to be used by the application server (PTW SM) of the claim 12, **characterized in that** said SIP message MESSAGE, is specialized and identified with the following labels included into the header field named Subject;
1. "refer"
2. "ok" and
3. "bye",
so specifying the informative content of the standard SIP MESSAGE. message

24. The extended SIP message of claim 23, **characterized in that** said first MESSAGE message label (MESSAGE(refer)) is used to notify the inviter of the response from the invited user embedded into the SIP MESSAGE request body content.

25. The extended SIP message of claim 24, **characterized in that** said body content contains a list including the public user identity of each invited user that has accepted, except the recipient.

26. The extended SIP message of claim 23, **characterized in that** said second MESSAGE message label (MESSAGE(ok)) is used to notify each new invited user and each user already in the session which has to be added to the current session of the response from the considered invited user embedded into the SIP MESSAGE request body content.

27. The extended SIP message of claim 26, **characterized in that** said body content contains a list including the public user identity of each new invited user that has accepted.

28. The extended SIP message of claim 23, **characterized in that** said third MESSAGE message label (MESSAGE(bye)) is used to notify the BYE request from a user leaving the session to the users staying in the session.

29. The extended SIP message of claim 28, **characterized in that** said body content contains the public identity of the participant which has left the session.

30. Extended SIP request message of the type INVITE designed to be used by the application server (PTW SM) of the claim 12, **characterized in that** the list including the Public user identity of each user already in the session except the inviting and the list including the Public user identity of each invited user is embedded into the body content.

31. The extended SIP message of any claim from 23 to 30, **characterized in that** the header field Conference-ID of all the SIP messages relevant to a session established by an user terminal includes the value of a Conference identifier parameter used as common session identifier.
